# EUROPEAN PATENT SPECIFICATION

(11) **EP 4 377 386 B1**
(45) Date of publication and mention of the grant of the patent: **14.05.2025**
(21) Application number: 22755203.1
(22) Date of filing: 27.07.2022
(51) Int. Cl.: C08K 3/013, C08K 3/22, C08K 5/00

(54) **OPAQUE LIGHTLY COLOURED THERMOPLASTIC MOULDING COMPOSITION**
OPAKE, LEICHT GEFÄRBTE THERMOPLASTISCHE FORMZUSAMMENSETZUNG
COMPOSITION DE MOULAGE THERMOPLASTIQUE OPAQUE LÉGÈREMENT COLORÉE

(30) Priority: 30.07.2021 EP 21188666
(43) Date of publication of application: 05.06.2024
(73) Proprietor: Röhm GmbH, 64295 Darmstadt (DE)
(72) Inventor: GOLCHERT, Ursula, 64807 Dieburg (DE); BECKER, Ernst, 64625 Bensheim (DE); NAU, Stefan, 64572 Büttelborn (DE)
(74) Representative: Röhm Patent Association
(86) International application number: PCT/EP2022/071083
(87) International publication number: WO 2023/006818

(56) References cited:
- EP-A1- 3 868 817
- US-A1- 2010 255 237
- LARRY LANE: "A New Class of Weather-Fast Pigments", 1 April 2005 (2005-04-01), XP055713953, Retrieved from the Internet <URL:https://www.pcimag.com/articles/83054-a-new-class-of-weather-fast-pigments> [retrieved on 20200713]
- RYAN, MARK: "Technical Paper Pigments", EUROPEAN COATINGS JOURNAL, vol. 3, 2013, pages 74 - 78, XP055873605, Retrieved from the Internet <URL:https://www.unicoil.com.sa/wp-content/uploads/2017/04/Lead_is_Dead-ECJ_2013_03.pdf> [retrieved on 20211216]
- DATABASE WPI Week 201952, Derwent World Patents Index; AN 2019-46115K, XP002805081

## Description

### Field of the invention

The present invention relates to opaque lightly coloured thermoplastic moulding composition having improved long-term weathering stability as well as excellent optical appearance, especially high colour brilliance. The inventive thermoplastic moulding compositions includes the combination of an inorganic pigment and an organic soluble dye, wherein the inorganic pigment is selected from specific mixed metal oxides and mixed metal oxosulfides. The invention also relates to the process for producing the coloured moulding composition and to colouring compositions, such as masterbatches, which can be used for producing the coloured thermoplastic moulding composition. The invention further relates to opaque lightly coloured formed articles made from the inventive thermoplastic moulding composition, for example injection moulded articles and extruded articles.

### Prior art

Generally, thermoplastic moulding compositions are characterised by the fact that they can be melted several times in order to produce extruded intermediate or semi-finished products or to produce moulded parts, by cooling the polymer melt in cavities designed for this purpose. Often such extruded or moulded parts are used in outdoor application, such as in the automotive or construction sector. As a consequence, this multiple thermal load and weathering stress requires specific demands for coloured thermoplastic moulding compositions and colourants used herein.

Transparent thermoplastic polymers, such as polymethyl methacrylate (PMMA), polyesters, polycarbonates and polyamides, are often coloured in various colours using soluble organic dyes, such as perinone-, azo- and anthraquinone-type dyes, as well as organic and inorganic pigments. Transparent colored thermoplastic materials are mainly achieved with organic dyes which are truly or colloidally soluble in the monomer or the polymer, while opaque colored thermoplastic materials are often obtained by using inorganic white and colored pigments or metal powder (Kunststoff-Handbuch, Volume IX, Polymethacrylate, Carl Hanser Verlag, Munich).

The use of metal oxides, for examples iron (III) oxide (Fe₂O₃) or mixed metal oxides containing metal ions from the group Fe, Ti, Cr, Sb, Mn, leads to bright, colourful colourings, but their appearance is dull and not brilliant. Cadmium based pigments, such as cadmium sulfide or cadmium sulfide/selenide, were used to a significant extent, for example for coloring of acrylic glass. However, the use of cadmium containing pigments is no longer preferred due to environmental protection considerations, as cadmium is released in an environmentally harmful form in the disposal of wastes.

Several yellow or orange organic pigments, such as organic pigments from the group of diketopyrrolopyrroles (e.g. Pigment Red 254), which are preferred in the paint and coating industry, cannot be used for thermoplastic moulding compositions as a rule, because they show a colour change to yellow at temperatures above 260°.

It is further described in the state of the art to use a combination of lightly coloured organic soluble dyes and titanium dioxide (TiO₂). The disadvantage of this combination is the low weathering stability as it becomes apparent in commonly weathering tests, e.g. Xenotest. The organic soluble dye typically shows a low weathering stability and therefore it degrades and the white TiO₂ becomes more visible resulting in a significant bleaching out and brightening of the colour impression.

EP 0 450 478 A2 describes acrylic glass coloured with organic pigments which should have improved weathering resistance due to the addition of an acid. The organic pigment can be selected from commonly known and available pigments, such as Pigment Yellow 151, Pigment Yellow 139 or Pigment Red 242; or a combination of a white pigment, such as titanium dioxide, and a soluble dye, such as Macrolex^{®} dyes (Lanxess), Solvaperm^{®} dyes (Clariant) and Thermoplast^{®} dyes (BASF SE).

The document DE 10 2004 058083 describes dark IR-reflecting moulding compositions, Different brown, grey, dark and green inorganic pigments are utilized, wherein said inorganic pigments are metal oxide based having spinel structure.

WO 2015/036526 A1 describes deep black coloured moulding compositions based on polystyrene, which comprises a nanoscale carbon black and at least two organic dye. Light coloured compositions are not described and cannot be obtained with the colouring composition as described in WO 2015/036526 A1.

WO 2019/228959 A1 discloses an opaque multi-layer body comprising a substrate layer based on polycarbonate or polymethylmethacrylate and a coating layer including a UV absorber, wherein the substrate layer comprises a specific coated titanium dioxide and at least two other organic colorants, selected from organic or inorganic dyes or pigment. WO 2019/228959 describes examples of a polycarbonate substrate layer materials comprising specific coated titanium dioxide, a yellow inorganic pigment based on mixed metal oxides (e.g. Pigment Yellow 53 or Pigment Brown 24) and a soluble organic dye, e.g. Solvent Red 135, Solvent Yellow 93, or Solvent Yellow 114.

Pyrochlore and rutile type metal oxides are generally known and often used as inorganic pigments in several applications. Usually, pyrochlores crystallize in the cubic crystal system and often form octahedral crystals with brown, red, orange or yellowish colour. Typically, rutiles crystallize in the tetragonal crystal system. Often pyrochlore or rutile used as pigments are mixed metal oxides, wherein typically main-group metals or transition metals (e.g. Zn, Cr, Sn) are built into their crystal lattice. For example, transition metal-based pyrochlores are preferably those based on niobium-tin or niobium-tin-zinc and metal-based rutiles are those based on titanium-tin-zinc.

For example, lead antimony pyrochlore is known as Pigment Yellow 41. Niobium/antimony pyrochlore type pigments comprising one or more divalent metal ions, in particular tin and/or zinc and their preparation are described in WO 2014/160218 and WO 2011/156362. Niobium tin pyrochlores (Niobium Tin Pyrochlore; NTP), e.g. niobium tin zinc pyrochlore (Pigment Yellow 227), are offered by Shepard Color Company.

For example, known pigments from the rutile class are nickel titanate, e.g. Ni/Sb/Ti oxide (Pigment Yellow 53), chrome titanate, e.g. Cr/Sb/Ti oxide (Pigment Brown 24), both available from BASF as well as Sn/Zn/Ti oxide (Pigment Yellow 216, available from by Shepard Color Company).

The use of pyrochlore and rutile type metal oxide pigments for colouring of textile layers in adhesive tapes is described in WO 2019/101377. EP 3 868 817 A1 describes polyamide-based polymer compositions, for high-voltage components, comprising a pigment system based on Ti/Sn/Zn mixed metal oxides, for example Pigment Orange 82 or Pigment Yellow 216.

Further, the publication M. Ryan, European Coatings Journal (2013), (3), 74-78 describes yellow and orange pigments, including niobium tin pyrochlore as yellow pigment as well as several titanate pigments, such as nickel titanate (e.g. Pigment Yellow 53), chrome titanate (e.g. Pigment Brown 24), bismuth vanadate (e.g. Pigment Yellow 184) and rutile tin zinc pigments, e.g. Pigment Yellow 216. Thermal stability and weathering stability of these coloring compositions and their use in thermoplastic resins are not discussed.

Furthermore, the use of rutile tin zinc pigments, e.g. Pigment Yellow 216 (SolaplexTM), for coating applications, such as automotive coatings, is described in publication Larry Lane, "A New Class of Weather-Fast Pigments", PCI Paint & Coatings Industry, April 1, 2005. Said pigment shows high resistance to acids as well as high weathering resistance. It is described that said inorganic pigment can be used ideal alone or in combination with high-performance organic pigments and titanium dioxide to produce a full color plate.

### Object of the invention

It has therefore been an object of the present invention to provide an opaque lightly coloured thermoplastic moulding composition having excellent optical properties, in particular a high colour brilliance, which is typically measured as Chroma (C*) according to DIN 5033-3, as well as a high weathering stability, which is typically measured as difference in colour distance ΔE, measured according to DIN 6174, under weathering conditions, such as Xenotest.

Further, it was desired that said thermoplastic moulding composition has excellent thermally stable optical properties and remains its high colour brilliance, even upon exposure to increased temperatures and/or high shearing forces, e.g. during injection moulding of parts having a complex geometrical shape.

Another goal of the present invention was providing of opaque lightly coloured formed articles, such as moulded parts or extruded articles, in particular those having these advantageous properties and/or having a complex geometrical shape.

Additionally, an object of the invention is to provide colouring compositions including the inventive combination of inorganic pigment and organic dye, which are easy to handle and highly suitable for preparing the inventive thermoplastic moulding compositions via a cost-efficient, easy and safe process.

### Summary of the invention

The present invention is based on a surprising finding that opaque and lightly coloured moulding compositions, having excellent colour brilliance as well as improved weathering stability, can be obtained, when a specifically selected inorganic pigment is combined with at least one soluble organic dye. It was found that improved weathering stability is obtained when specific yellow or orange inorganic pigment, in particular mixed oxides or mixed oxosulfides of pyrochlore structure type or of rutile structure type, are used instead of titanium dioxide as known from the prior art. Surprisingly, it has been found that the inventive combination of specific inorganic pigment with a soluble organic dye shows improved colour brilliance compared to a combination of other yellow or orange inorganic pigments known from the prior art with the same soluble organic dye. Thus, the inventive combination of specific yellow or orange inorganic pigments with at least one soluble organic dye offers superior properties for application in thermoplastic moulding compositions, which are opaque lightly coloured, and which requires high heat and weathering stability.

The present invention is directed to a thermoplastic moulding composition comprising:
A. a polymer matrix A comprising at least one thermoplastic polymer;
B. at least one inorganic pigment B selected from mixed metal oxides or mixed metal oxosulfides B1, comprising the metals niobium (Nb), tin (Sn) and zinc (Zn), and/or from mixed metal oxides or mixed metal oxosulfides B2, comprising the metals titanium (Ti), tin (Sn) and zinc (Zn);
C. at least one organic dye C, typically a soluble organic dye C, preferably selected from monoazo dyes, perinone dyes, quinophthalone dyes and anthraquinone dyes.

Preferably, the invention is directed to an opaque lightly coloured thermoplastic moulding composition. In particular, the opaque lightly coloured thermoplastic moulding composition shows a yellow, orange or red colour impression.

In terms of the present invention "opaque", and terms such as "opaque thermoplastic moulding compositions" or "opaque formed article", refer to colours or coloured material, which have a transmittance Y (D65) of less than 10%, preferably less than 6.5 %, determined at 23 °C according to DIN 5033-7 using standard illumination D65/10°, and measured on a sample, especially a injected moulded sample, having a thickness of 3.0 mm.

In terms of the present invention "lightly coloured", and terms such as "lightly coloured thermoplastic moulding compositions" or "lightly coloured formed article", refer to colours or coloured material, which show a yellow, orange or red colour impression; preferably to colours or coloured material having colour values a* and b* both being greater than zero (a* >0 and b* > 0), determined at 23 °C according to DIN 5033-3 using standard illumination D65/10°, measured at reflexion, on a sample, especially a injected moulded sample, having a thickness of 3.0 mm.

In terms of the present invention "soluble dye" or "soluble organic dye" refers to organic colorants, which are soluble in the thermoplastic matrix A, comprising at least one thermoplastic polymer, in amounts typically used for colouring the thermoplastic matrix A. In particular, the term "soluble organic dye" refers to an organic dye which can be solved in the polymer matrix A in an amount of at least 0.5 wt.-%, preferably of at least 1 wt.-%, more preferably of at least 5 wt.-%, based on the mixture of polymer matrix A and soluble organic dye. Typically, the term "soluble organic dye" refers to organic dyes which are dispersed monomolecular in the polymer matrix A, preferably in the amounts given above.

Generally, a thermoplastic matrix solely comprising the soluble organic dye C (meaning a composition consisting of the polymer matrix A and the one or more organic dye(s)) exhibits a very low haze, preferably a haze (measured at 23 °C, according to standard ASTM D1003, using test specimens having a thickness of 1 mm) of equal or less than 5 % (<=5 %), preferably of equal or less than 4 % (<=4 %). In particular, the term "soluble organic dye" refers to an organic dye wherein a composition consisting of the polymer matrix A and the organic dye in an amount of 0.5 wt.-%, preferably in an amount of 1 wt.%, based on the composition of polymer matrix A and soluble organic dye, exhibits a haze (measured at 23 °C, according to standard ASTM D1003, using test specimens having a thickness of 1 mm) of equal or less than 5 % (<=5 %), preferably of equal or less than 4 % (<=4 %).

In terms of the present invention "pigment" refers to inorganic and organic colorants, which are practically insoluble in the thermoplastic matrix A, comprising at least one thermoplastic polymer, in amounts in which it is used for colouring the thermoplastic matrix A. Typically, the term "pigment" encompasses coloured, white and black colorants. Typically, the term "pigment" refers to organic colorants which are dispersed in form of solid particles, particularly finely dispersed solid particles, in the polymer matrix A.

The term "coloured thermoplastic moulding composition" as used herein refers to a thermoplastic moulding composition comprising one or more colorant, preferably comprising at least the colorants A and B as described herein, wherein the colorants are uniformly distributed in the polymer matrix A of the thermoplastic moulding composition.

### Detailed description

In a preferred embodiment, the inventive thermoplastic moulding composition comprises, each based on the total thermoplastic moulding composition:
A. from 49.99998 to 99.99998 wt.-%, preferably from 59.9998 to 99.9998 wt.-%, more preferably from 89.998 to 99.998 wt.-%, of the polymer matrix A, wherein the polymer matrix A preferably comprises (or consists of) at least one thermoplastic polymer selected from polyalkyl (meth)acrylate, poly(meth)acrylimides, polyalkyl (meth)acrylate copolymers, polystyrene, polystyrene copolymer, acrylonitrile copolymers, polycarbonates, polyesters, polyamides, polyvinylidene fluoride and polyolefins;
B. from 0.00001 to 5.0 wt.-% preferably from 0.0001 to 4.0 wt.-%, more preferably from 0.001 to 3.0 wt.-%, of the at least one inorganic pigment B;
C. from 0.00001 to 5.0 wt.-% preferably from 0.0001 to 4.0 wt.-%, more preferably from 0.001 to 3.0 wt.-%, of the at least one organic dye C, wherein the organic dye C is preferably selected from monoazo dyes, perinone dyes, quinophthalone dyes, anthraquinone dyes and pyrazolone dyes, more preferably monoazo dyes, perinone dyes, quinophthalone dyes, and anthraquinone dyes;
D. from 0 to 50.0 wt.-%, preferably from 0 to 40.0 wt.-%, more preferably 0 to 10.0 wt.%, of one or more additional component D, preferably selected from organic pigments, inorganic pigments different from B, scattering particles, impact modifiers, antistatic agents, antioxidants, moulding-release agents, flame retardants, lubricants, flow improvers, UV absorbing agents, light stabilizers and organophosphorus compounds, agents providing weathering resistance and plasticizers.

Preferably, the mass ratio B:C of the inorganic pigment B and the organic dye C, as defined herein, is in the range of 0.1 to 10, preferably 0.5 to 5, more preferably 0.75 to 3.

Especially, the inventive thermoplastic moulding composition has a transmittance Y (D65) of less than 10 %, preferably less than 6.5 %, determined at 23 °C according to DIN 5033-7 using standard illumination D65/10°, measured on a sample, especially an injected moulded sample, having a thickness of 3.0 mm. Especially, the inventive thermoplastic moulding composition has colour values a* and b*, which are both greater than zero (a* >0 and b* > 0), determined at 23 °C according to DIN 5033-3 using standard illumination D65/10°, measured at reflexion, on a sample, especially a injected moulded sample, having a thickness of 3.0 mm. Preferably, a* > 0.5, more preferably a* > 1; and/or b* > 0.5, more preferably b* > 1.

Preferably, the inventive thermoplastic moulding composition exhibits a luminance L* of greater than or equal to 30, determined at 23 °C according to DIN 5033-3 using standard illumination D65/10°, measured at reflexion on a sample, especially an injected moulded sample, having a thickness of 3.0 mm.

Preferably, the inventive thermoplastic moulding composition has an excellent weathering stability, i.e. showing colour difference ΔE (D₆₅, 10°) determined according to DIN 6174 of less than or equal than 3, preferably of less than or equal to 2, after 3000 hours under Xenon test conditions, including Xenon radiation daylight (ISO 4892-2).

For example, the thermoplastic moulding composition comprises a polymer matrix A essentially consisting of at least one polyalkyl (meth)acrylate, preferably polymethyl(meth)acrylate (PMMA), and exhibits a melt volume flow rate MVR from 0.5 to 10.0 cm³ / 10 min, measured at 230 °C with a load of 3.8 kg according to ISO 1133 (2011).

For example, the thermoplastic moulding composition comprises a polymer matrix A essentially consisting of at least one polycarbonate (PC) and exhibits a melt volume flow rate MVR from 10.0 to 36.0 cm³ / 10 min, measured at 300 °C with a load of 1.2 kg according to ISO 1133 (2011).

For example, the thermoplastic moulding composition comprises a polymer matrix A essentially consisting of at least one styrene-acrylonitrile copolymer (SAN) and exhibits a melt volume flow rate MVR from 5.0 to 30.0 cm³ / 10 min, measured at 220 °C with a load of 10 kg according to ISO 1133 (2011).

Hence, the coloured thermoplastic moulding compositions according to the present invention can be advantageously used for extrusion and injection moulding, wherein melt temperature, mould temperature, and injection velocity may be adapted based on the polymer matrix A. Preferably, the inventive thermoplastic moulding composition has an excellent thermal stability and can be used for conventional melt processing, such as extrusion and injection moulding, typically at temperatures in the range of 150 to 320 °C °C, without any undesired change of colour impression or colour distances. Typically, if the thermoplastic polymer is polyalkyl (meth)acrylate, thermal stability is given at a temperature ranging from 200 °C to 300°C, more preferably from 230 °C to 290°C.

### Polymer matrix A

The polymer matrix A comprises, preferably essentially consists of, at least one thermoplastic polymer, preferably selected from polyalkyl (meth)acrylates (e.g. polymethylmethacrylate PMMA), poly(meth)acrylimides (e.g. polymethyl methacrylimide PMMI), polyalkyl (meth)acrylate copolymers, polystyrene, polystyrene copolymers, acrylonitrile copolymers, polycarbonates (preferably aromatic polycarbonates derived from bisphenols or polycarbonates derived from isosorbide), polyesters (preferably aromatic polyesters, more preferably polyethylene terephthalate), polyamides, polyvinylidene fluoride (PVDF) and polyolefins (e.g. cycloolefin copolymers COC or clearified polypropylene).

Preferably, the polymer matrix A comprises or essentially consists of a transparent thermoplastic polymer or a transparent blend of at least two thermoplastic polymers, wherein the term "transparent" refers to thermoplastic polymers or polymer compositions having a haze of equal or less than 70 %, preferably equal or less than 50 %, more preferably equal or less than 30 %, also preferably equal or less than 10 %, determined according to standard ASTM D1003 measured at 23 °C on an injection moulded specimen having a thickness of 3 mm.

More preferably, the thermoplastic polymer is selected from polyalkyl (meth)acrylates (e.g. polymethylmethacrylate PMMA), poly(meth)acrylimides (e.g. polymethyl methacrylimide PMMI), polyalkyl (meth)acrylate copolymers, polystyrene, polystyrene copolymers, acrylonitrile copolymers, polycarbonates, polyesters (preferably polyethylene terephthalate), polyvinylidene fluoride and mixtures thereof. Even more preferably, the thermoplastic polymer is selected from the group consisting of polyalkyl (meth)acrylates, polyalkyl (meth)acrylate copolymers, poly(meth)acrylimides, polycarbonates, and mixtures thereof.

According to an especially preferred embodiment, the polymer matrix A comprises (preferably essentially consists of) at least one thermoplastic polymer selected from polyalkyl (meth)acrylates (e.g. polymethylmethacrylate PMMA), polyalkyl (meth)acrylate copolymers, poly(meth)acrylimides (e.g. polymethyl methacrylimide PMMI), polycarbonates (e.g. polycarbonates derived from bisphenols or isosorbide), and styrene-acrylonitrile copolymers (SAN). More preferably the polymer matrix A comprises (preferably essentially consists of) a thermoplastic polymer selected from polymethylmethacrylate (PMMA) and/or polymethyl methacrylimide (PMMI).

It is also preferred that the inventive thermoplastic moulding composition is based on impact-modified polyalkyl (meth)acrylates (e.g. impact-modified polymethylmethacrylate PMMA) and/or impact-modified polyalkyl (meth)acrylate copolymers, wherein the thermoplastic moulding composition comprises:
a polymer matrix A, which comprises or essentially consists of one or more polyalkyl (meth)acrylate (e.g. polymethylmethacrylate PMMA) and/or one or more polyalkyl (meth)acrylate copolymers,
and at least one impact modifier, as described below, as additional component D, which is dispersed in the polymer matrix A.

Preferably, the polymer matrix A is present in an amount of from 49.99998 to 99.99998 wt.-%, preferably from 59.9998 to 99.9998 wt.-%, preferably from 69.99998 to 99.99998 wt.-%, preferably from 89.9998 to 99.9998 wt.-%, more preferably from 89.998 to 99.998 wt.-%, based on the total thermoplastic moulding composition. Typically, the lower limit of the polymer matrix A may be adapted, if one or more of the optional additional components D are present in the inventive thermoplastic moulding composition.

### Polyalkyl (meth)acrylates and polyalkyl (meth)acrylate copolymers

Polyalkyl (meth)acrylates are usually obtained by free-radical polymerization of mixtures which typically comprise an alkyl (meth)acrylate, typically methyl methacrylate (a), and at least one further (meth)acrylate (b). These mixtures generally comprise at least 50 wt.-%, preferably at least 60 wt.-%, particularly preferably at least 80 wt.-%, and even more preferably at least 90 wt.-%, based on the weight of the monomers, of methyl methacrylate (a). The amount of methyl methacrylate (a) generally used is from 50.0 wt.-% to 99.9 wt.-%, preferably from 80.0 wt.-% to 99.0 wt.-% and particularly preferably from 90.0 wt.-% to 99.0 wt.-%, based on the weight of monomers.

These mixtures for production of polyalkyl (meth)acrylates or polyalkyl (meth)acrylate copolymers can also comprise other (meth)acrylates (b) copolymerizable with methyl methacrylate (a). The term *"(meth)acrylate"* as used herein is meant to encompass methacrylates, acrylates and mixtures thereof. (Meth)acrylates may derive from saturated alcohols, e.g. methyl acrylate, ethyl (meth)acrylate, propyl (meth)acrylate, n-butyl (meth)acrylate, tert-butyl (meth)acrylate, isobutyl (meth)acrylate, pentyl (meth)acrylate and 2-ethylhexyl (meth)acrylate; or from unsaturated alcohols, e.g. oleyl (meth)acrylate, 2-propynyl (meth)acrylate, allyl (meth)acrylate, vinyl (meth)acrylate; and also aryl (meth)acrylates, such as benzyl (meth)acrylate or phenyl (meth)acrylate, cycloalkyl (meth)acrylates, such as 3-vinylcyclohexyl (meth)acrylate, bornyl (meth)acrylate; hydroxyalkyl (meth)acrylates, such as 3-hydroxypropyl (meth)acrylate, 3,4-dihydroxybutyl (meth)acrylate, 2-hydroxyethyl (meth)acrylate, 2-hydroxypropyl (meth)acrylate; glycol di(meth)acrylates, such as 1,4-butanediol (meth)acrylate, (meth)acrylates of ether alcohols, e.g. tetrahydrofurfuryl (meth)acrylate, vinyloxyethoxyethyl (meth)acrylate; amides and nitriles of (meth)acrylic acid etc.

The amount of the (meth)acrylic comonomers (b) generally used is from 0.1 wt.-% to 50.0 wt.-%, preferably from 1.0 wt.-% to 20.0 wt.-% and particularly preferably from 1.0 wt.-% to 10.0 wt.-%, based on the weight of monomers, and the compounds here can be used individually or in the form of a mixture.

The polymerization reaction is generally initiated by known free-radical initiators. Among the preferred initiators are inter alia the azo initiators well known to persons skilled in the art, e.g. AIBN and 1,1-azobiscyclohexanecarbonitrile, and peroxy compounds, such as methyl ethyl ketone peroxide, acetylacetone peroxide, dilauryl peroxide, tert-butyl 2-ethylperhexanoate, ketone peroxide, methyl isobutyl ketone peroxide, cyclohexanone peroxide, dibenzoyl peroxide, tert-butyl peroxybenzoate, tert-butylperoxy isopropyl carbonate, 2,5-bis(2-ethylhexanoylperoxy)-2,5-dimethylhexane, tert-butyl 2-ethylperoxyhexanoate, tert-butyl 3,5,5-trimethylperoxyhexanoate, dicumyl peroxide, 1,1-bis(tert-butylperoxy)cyclohexane, 1,1-bis(tert-butylperoxy)-3,3,5-trimethylcyclohexane, cumyl hydroperoxide, tert-butyl hydroperoxide, bis(4-tert-butylcyclohexyl) peroxydicarbonate, or mixtures thereof.

Polyalkyl (meth)acrylate copolymers can usually be obtained by free-radical polymerization of mixtures, comprising an alkyl (meth)acrylate, typically methyl methacrylate (a), and at least one further (meth)acrylate (b) described above as well as other unsaturated monomers (c) which are copolymerizable alone or by employing other monomers that facilitate copolymerization with methyl methacrylate and with the abovementioned (meth)acrylates. Among these are inter alia 1-alkenes, such as 1-hexene, 1-heptene; branched alkenes, such as vinylcyclohexane, 3,3-dimethyl-1-propene, 3-methyl-1-diisobutylene, 4-methyl-1-pentene; acrylonitrile; vinyl esters, such as vinyl acetate; styrene, substituted styrenes having an alkyl substituent in the side chain, e.g. α-methylstyrene and α-ethylstyrene, maleic acid derivatives, such as maleic anhydride, methylmaleic anhydride, maleimide, methylmaleimide; and dienes, such as divinylbenzene.

The amount of these comonomers (c) generally used is from 0.0 wt.-% to 40.0 wt.-%, preferably 0.0 wt.-% to 30.0 wt.-%, more preferably from 0.0 wt.-% to 15.0 wt.-% and particularly preferably from 0.0 wt.-% to 10.0 wt.-%, based on the weight of monomers, and the compounds here can be used individually or in the form of a mixture.

In another preferred example, the polymer matrix A comprises or consists essentially of at least one polyalkyl (meth)acrylate and/or polyalkyl (meth)acrylate copolymer, which comprises or essentially consists of:
50.0 to 100.0 wt.-%, preferably 65 to 99 wt.-%, of methyl methacrylate (MMA);
0.0 to 20.0 wt.-%, preferably 0.1 to 4 wt.-% of at least one alkyl(meth)acrylate other than MMA, preferably selected from C1-C10 alkyl (meth)acrylates, more preferably selected from C1-C4 alkyl (meth)acrylates for example selected from methyl acrylate, ethyl acrylate, n-butyl acrylate, and butyl methacrylate;
0.0 to 40 wt.-%, preferably 5.0 wt.-% to 30.0 wt.-%, of at least one vinyl aromatic monomer, preferably styrene; and
0.0 to 20 wt.-%, preferably 5.0 to 20.0 wt.-%, of one or more another co polymerizable monomer, for example at least one unsaturated carboxylic acid or unsaturated carboxylic acid anhydride, or acrylonitrile;
wherein all amounts are given based on the total weight of the polyalkyl (meth)acrylate or polyalkyl (meth)acrylate copolymer.

In a preferred example, the polymer matrix A may comprise or consists of at least one polyalkyl (meth)acrylate copolymer, which comprises or essentially consists of:
48.0 to 90.0 wt.-%, preferably 63.0 to 81.0 wt.-% of at least one alkyl(meth)acrylate, preferably methyl methacrylate (MMA);
8.0 to 35.0 wt.-%, preferably 12.0 to 22.0 wt.-% of at least one mono vinyl aromatic monomer, preferably styrene; and
2.0 to 17.0 wt.-%, preferably 7.0 to 15.0 wt.-% of at least one unsaturated carboxylic acid anhydride, for example selected from acrylic anhydride, methacrylic anhydride, maleic anhydride, 1,2-cyclohexanedicarboxylic anhydride, cyclohexyl maleimide, and itaconic anhydride, more preferable maleic anhydride;
wherein all amounts are given based on the total weight of the polyalkyl (meth)acrylate copolymer.

More preferably, the polyalkyl (meth)acrylate copolymer comprises or essentially consists of 50.0 to 85.0 wt.-% of MMA, 10.0 to 20.0 wt.-% of styrene, and 5.0 to 15.0 wt.-% of maleic anhydride; wherein all amounts are given based on the total weight of the polyalkyl (meth)acrylate.

Suitable polyalkyl (meth)acrylate copolymers and blends thereof are for example described in WO 2005/108486 A1, WO 2008/148595 A1 and WO 2020/126722 A1.

Further preference is given to polyalkyl (meth)acrylates which are obtainable by polymerization of a composition having, as polymerizable constituents:
(a) from 50.0 wt.-% to 99.9 wt.-% of methyl methacrylate;
(b) from 0.1 wt.-% to 50.0 wt.-% of an acrylic acid ester of a C1-C4 alcohol;
(c) from 0.0 wt.-% to 30.0 wt.-% of monomers co-polymerizable with the monomers (a) and (b).

In a particularly preferred embodiment, the polyalkyl (meth)acrylate is obtainable by polymerization of a composition whose polymerizable constituents comprise, based on the weight of the polymerizable composition:
(a) from 80.0 wt.-% to 99.0 wt.-% of methyl methacrylate, and
(b) from 1.0 wt.-% to 20.0 wt.-% of an acrylic acid ester of a C1-C4 alcohol.

Particular preference is given to polyalkyl (meth)acrylates composed of from 80.0 wt.-% to 99.5 wt.% of methyl methacrylate and from 0.5 wt.-% to 20.0 wt.-% of methyl acrylate and/or ethyl acrylate, the amounts here being based on 100 wt.-% of the polymerizable constituents. Particularly advantageous copolymers are those obtainable by copolymerization of from 85.0 wt.-% to 99.5 wt.-% of methyl methacrylate and from 0.5 wt.-% to 15.0 wt.-% of methyl acrylate and/or ethyl acrylate, where the amounts are based on 100 wt.-% of the polymerizable constituents. For instance, the polyalkyl (meth)acrylates may comprise from 85.0 wt.-% to 99.9 wt.-% of methyl methacrylate and from 0.1 wt.-% to 15.0 wt.-% of methyl acrylate, preferably from 95.0 wt.-% to 99.9 wt.-% of methyl methacrylate and from 0.1 wt.-% to 5.0 wt.-% of methyl acrylate, more preferably from 96.0 wt.-% to 99.9 wt.-% of methyl methacrylate and from 0.1 wt.-% to 4.0 wt.-% of methyl acrylate. The Vicat softening points VSP (ISO 306 : 2013, method B50) of said polyalkyl (meth)acrylates is typically at least 90 °C, preferably from 95 °C to 130 °C.

The weight average molecular weight Mw of the polyalkyl (meth)acrylates is generally in the range from 50 000 g/mol to 300 000 g/mol. Particularly advantageous mechanical properties are obtained with polyalkyl (meth)acrylates having a weight average molecular weight Mw in the range from 50 000 g/mol to 200 000 g/mol, preferably from 80 000 g/mol to 180 000 g/mol, in each case determined by means of GPC against PMMA calibration standards and THF as an eluent.

In another preferred example, the polymer matrix A may comprise or consists of a blend comprising polymethyl methacylate (PMMA) and at least one polyvinylidene fluoride (PVDF), such as Kynar^{®} product types available from Arkema.

In another preferred example, the polymer matrix A may comprise or consists of a blend comprising polymethyl methacylate (PMMA) and at least one poly(lactide) (PLA), for example Altuglas^{®} Rnew^{®} products available from Altuglas International.

### Poly(meth)acrylimides

The polymer matrix A may comprise at least one thermoplastic polymer selected from poly(meth)acrylimides, preferably polymethyl (meth)acrylimide, more preferably polymethyl methacrylimide (PMMI). Poly(meth)acrylimides, which may be used in the present invention comprises at least 30 wt.-%, preferably at least 50 wt.-%, most preferably at least 60 wt.-%, based on the weight of the poly(meth)acrylimide, of repeating units of Formula (I): 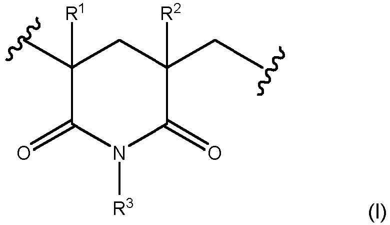 in which R¹ and R² are independently selected from hydrogen and a methyl group, R¹ and R² being preferably represented by a methyl group, and R³ is hydrogen or a C₁-C₄-alkyl group, preferably a methyl group.

Manufacturing processes for PMMI are disclosed by way of example in EP-A 216 505, EP-A 666 161 or EP-A 776 910, the entire disclosure of which is incorporated herein by reference.

The starting material used for manufacturing of poly(meth)acrylimides comprises a polymer derived from alkyl esters of methacrylic acid and generally composed of more than 50.0 wt.-%, preferably of more than 80.0 wt.-%, particularly preferably of from 95.0 wt.-% to 100.0 wt.-%, of units of alkyl esters of methacrylic acid having from 1 to 4 carbon atoms in the alkyl radical. Methyl methacrylate is preferred. Preferred polymers are composed of at least 80.0 wt.-%, preferably of more than 90.0 wt.-%, more preferably of more than 95.0 wt.-%, still more preferably of more than 99.0 wt.-% of methyl methacrylate, wherein use of neat methyl methacrylate is most preferable. Comonomers that can be used comprise any of the monomers copolymerizable with methyl methacrylate, in particular alkyl esters of acrylic acid having from 1 to 4 carbon atoms in the alkyl radical, acrylo- or methacrylonitrile, acryl or methacrylamide, styrene, or else maleic anhydride. Preference is given to thermoplastically processable polymers of this type whose reduced viscosity is in the range from 20 ml/g to 92 ml/g, preferably from 50 ml/g to 80 ml/g (measured to ISO 8257 (2006), Part 2). They are used in the form of powder or pellets whose median particle size is from about 0.03 mm to 5 mm.

Typically, PMMIs for use in the present invention have a weight average molar weight Mw of from 80 000 g/mol to 200 000 g/mol, preferably from 90 000 g/mol to 150 000 g/mol, determined by GPC using PMMA as a standard. Such materials are commercially available from Röhm GmbH under the trademark PLEXIMID^{®}. Suitable products include but are not limited to PLEXIMID^{®} TT50, PLEXIMID^{®} TT70, PLEXIMID^{®} 8805, PLEXIMID^{®} 8813, PLEXIMID^{®} 8817.

### Polycarbonates

Polycarbonates may also be used as thermoplastic polymers in the present invention. Polycarbonates can be considered formally as polyesters formed from carbonic acid and aliphatic or aromatic dihydroxyl compounds. They are readily obtainable by e.g. reacting diglycols, isosorbide or bisphenols with phosgene or carbonic diesters, by polycondensation or transesterification reactions.

Preference is given to polycarbonates which are derived from bisphenols and/or isosorbide. These bisphenols include especially 2,2-bis(4-hydroxyphenyl)propane (bisphenol A), 2,2-bis(4 hydroxyphenyl)butane (bisphenol B), 1,1 bis(4 hydroxyphenyl)cyclohexane (bisphenol C), 2,2'-methylenediphenol (bisphenol F), 2,2-bis(3,5-dibromo-4 hydroxyphenyl)propane (tetrabromobisphenol A) and 2,2-bis(3,5 dimethyl-4-hydroxyphenyl)propane (tetramethylbisphenol A) and mixtures thereof. Typically, such aromatic polycarbonates are prepared by interfacial polycondensation or transesterification. The properties of the polycarbonate can be adjusted to the desired purpose through selection of the bisphenols.

Polycarbonates are, for example, commercially available from Covestro AG, Germany under the trademark Makrolon^{®}.

For example, suitable polycarbonates, derived from isosorbide, are commercially available transparent products of type DURABIO^{™} from Mitsubishi Chemical Corporation MCC.

### Polystyrene and polystyrene copolymers

The polymer matrix A may also comprise at least one thermoplastic polymer, selected from homo or copolymers comprising at least one vinyl aromatic monomer. Particularly suitable vinylaromatic monomers are selected from styrene, α(alpha)-methylstyrene, tert.-butylstyrene, mono chlorostyrene and vinyltoluene, with styrene and α-methylstyrene being particularly preferred. Aromatic vinyl monomers may be used alone or as a mixture thereof.

Preferably, the polymer matrix A may comprise at least one copolymer comprising an aromatic vinyl monomer and a vinyl cyanide monomer.

Examples of appropriate vinyl cyanide monomers for use in the present invention may include acrylonitrile, methacrylonitrile, ethacrylonitrile, phenylacrylonitrile, α-chloroacrylonitrile, fumaronitrile, and the like. These may be used alone or as a mixture thereof. For example, the vinyl cyanide monomer may include acrylonitrile and/or methacrylonitrile. In a particularly preferred embodiment, the vinyl cyanide monomer is acrylonitrile.

Typically, the copolymer may comprise 50.0 wt.-% to 90.0 wt.-%, preferably 55.0 wt.-% to 85.0 wt.-%, of the aromatic vinyl monomer; and 10.0 wt.-% to 50.0 wt.-%, preferably 15.0 to 45.0 wt.- of the vinyl cyanide monomer, based on the weight of the copolymer.

In a preferred embodiment the aromatic vinyl monomer is styrene, and the vinyl cyanide monomer is acrylonitrile. Such preferred thermoplastic copolymers are commonly known as styrene-acrylonitrile copolymers (SAN) resins and are commercially available from various manufacturers such as INEOS Styrolution Group GmbH (Frankfurt, Germany) or Trinseo S.A. (Luxembourg). Preparation of the such copolymers can be carried out by substantially any known polymerisation method described for preparation of SAN resins, such as mass, solution, emulsion or bead polymerisation.

Typically, styrene-acrylonitrile copolymers (SAN) of substantially any molecular weight may be employed, for example having a weight average molecular weight Mw of 60 000 g/mol to 300 000 g/mol, preferably of 100 000 g/mol to 250 000 g/mol. The average molecular weight Mw of the copolymer B can be determined by GPC with PMMA standards as described above.

More preferably, the thermoplastic copolymer may be selected from styrene-acrylonitrile copolymers (SAN) and rubber modified styrene-acrylonitrile copolymers, such as acrylonitrile-butadiene-styrene copolymers (ABS) and acrylonitrile-styrene-acrylate copolymers (ASA), as well as from alpha-methylstyrene acrylonitrile (AMSAN) copolymers and rubber modified AMSAN copolymers. For example, SAN copolymers are available as LURAN^{®} product types; for example ABS copolymers are available as Terluran^{®}, Lustran^{®}, or Novodur^{®}; for example ASA copolymers are available as Luran^{®} S, for example AMSAM copolymers are available as Luran^{®} High Heat, all from INEOS Styrolution.

Furthermore, the polymer matrix A may comprise at least one copolymer comprising an aromatic vinyl monomer, preferably styrene, and a conjugated diene monomer, preferably butadiene. For example, the polymer matrix A may comprise or consist of at least one styrene-butadiene block copolymer (SBC) and blends thereof. SBC copolymers are commonly known and commercially available under the tradename Kraton^{™} from Kraton Corporation or under the tradenames Styrolux^{®} and Styroflex^{®} from INEOS Styrolution. In particular the polymer matrix A may comprise of consist of blends of SBC with styrene polymers (such as impact modified General Purpose Polystyrene GPPS), blends of SBC with styrene-acrylic copolymers, such as methylmethacrylate-butadiene-styrene copolymers (MBS), e.g. available as Zylar^{®} or Clearblend^{®} product types from Ineos Styrolution. Further, the polymer matrix A may comprise or consist of methylmethacrylate-acrylonitrile-butadiene-styrene copolymers (MABS), e.g. available as TERLUX^{®} or CLEARLUX^{®} product types from Ineos Styrolution.

### Other thermoplastic polymers

For example, the polymer matrix A may comprise or consists of one or more polyamide, for example selected from commercially available transparent polyamide products, such as Grilamide TR^{®} from EMS-Chemie AG (e.g. Grilamid TR^{®} 90) and EMS-GRIVORY, both from EMS-Chemie, products of TROGAMIDE^{®} type from Evonik (e.g. TROGAMIDE^{®} CX 7323, TROGAMIDE^{®} T5000, TROGAMIDE^{®} BX), and VESTAMID^{®} product types from Evonik.

For example, the polymer matrix A may comprise or consists of one or more polyolefin, preferably one or more transparent polyolefin, more preferably selected from cycloolefin copolymers (COC), for example commercially available transparent cycloolefin copolymers, such as TOPAS^{®} COC products from TOPAS Advanced Polymers GmbH as well as ZEONEX^{®} and ZEONOR^{®} products from ZEON Corporation. Further, the polyolefin may be selected from nucleated or clearified polypropylenen (PP), for example produced using the Millad^{®} NX 8000 clarifying agent from Milliken.

### Inorganic pigment B

The inventive thermoplastic moulding composition comprises at least one inorganic pigment B; preferably selected from inorganic pigments showing a yellow, orange or brown colour impression; wherein the inorganic pigment B is selected
from mixed metal oxide or mixed metal oxosulfide B1, comprising the metals niobium (Nb), tin (Sn) and zinc (Zn);
and/or from mixed metal oxide or mixed metal oxosulfide B2, comprising the metals titanium (Ti), tin (Sn) and zinc (Zn).

Preferably, the mixed metal oxide or mixed metal oxosulfide B1 and the mixed metal oxide or mixed metal oxosulfide B2, each comprise at least 1 ppm, preferably at least 10 ppm, tin (Sn) and at least 1 ppm, preferably at least 10 ppm, zinc (Zn). In terms of the present invention ppm refers to weight parts (wppm), e.g. mg/kg. More preferably, the mixed metal oxide or mixed metal oxosulfide B1 and the mixed metal oxide or mixed metal oxosulfide B2, each comprise from 0.01 to 60 wt.-%, preferably from 10 to 50 wt.-% tin (Sn) and 0.01 to 30 wt.-%, preferably at least 1 to 20 wt.-% zinc (Zn), each calculated as metal and based on the total weight of B1 or B2.

The mixed metal oxides or mixed metal oxosulfides B1 and/or B2 may also comprise one or more additional element, preferably metal or metalloid, in particular selected from elements of groups 1, 2, 12, 13, 14, and 15 as well as rare earth metals (e.g. Sc, Y, La, Ce, Pr, Nd), more preferably selected from B, Al, Si, Sb, Ta, P, Zr, Hf, W, Mo and mixtures thereof. Preferably, the inorganic pigment(s) B1 and/or B2, more preferably the pigment B2, can comprise 0.1 to 20 wt.-%, preferably 0.5 to 15 wt.-%, more preferably 1 to 10 wt.-%, silicon (Si), calculated as SiO₂, based on the total weight of B1 or B2.

Preferably, the inorganic pigment(s) B1 and/or B2 may be mixed metal oxosulfide comprising 0.01 to 10 wt.%, preferably 0.1 to 7 wt.-%, more preferably 0.5 to 5 wt.-% sulfur (S), calculated as S, based on the total weight of B1 or B2.

In a preferred embodiment the mixed metal oxide or mixed metal oxosulfide B1 comprises from 20 to 60 wt.-%, preferably from 30 to 50 wt.%, niobium (Nb), calculated as Nb₂O₅; from 30 to 60 wt.-%, preferably from 40 to 60 wt.-%, tin (Sn), calculated as SnO₂; from 0.1 to 20 wt.-%, preferably from 1 to 10 wt.-%, zinc (Zn), calculated as ZnO, and from 0 to 10 wt.-%, preferably from 0.1 to 5 wt.-%, sulfur (S), calculated as S, and each based on the total weight of B1. Especially, the mixed metal oxide or mixed metal oxosulfide B1 comprises from 40 to 50 wt.-% niobium (Nb), calculated as Nb₂O₅; from 45 to 55 wt.-% tin (Sn), calculated as SnO₂; from 2 to 5 wt.-% zinc (Zn), calculated as ZnO, and from 0.5 to 2 wt.-%, sulfur (S), calculated as S, and each based on the total weight of B1.

In a preferred embodiment the mixed metal oxide or mixed metal oxosulfide B2 comprises from 10 to 60 wt.-%, preferably from 20 to 50 wt.%, titanium (Ti), calculated as TiO₂; from 20 to 70 wt.-%, preferably from 30 to 60 wt.-%, tin (Sn), calculated as SnO₂; from 1 to 30 wt.-%, preferably from 5 to 20 wt.-%, zinc (Zn), calculated as ZnO, and from 0 to 20 wt.-%, preferably from 0.1 to 10 wt.-%, silicon (Si), calculated as SiO₂, each based on the total weight of B2. Especially, the mixed metal oxide or mixed metal oxosulfide B2 comprises from 20 to 30 wt.-% titanium (Ti), calculated as TiO₂; from 45 to 55 wt.-% tin (Sn), calculated as SnO₂; from 10 to 20 wt.-% zinc (Zn), calculated as ZnO, and from 5 to 10 wt.-% silicon (Si), calculated as SiO₂, each based on the total weight of B2

Preferably, the at least inorganic pigment B is present in an amount of 0.00001 to 5.0 wt.-% preferably from 0.0001 to 4.0 wt.-%, more preferably from 0.001 to 3.0 wt.-%, also preferably from 0.01 to 2.0 wt.-%, based on the total thermoplastic moulding composition. Preferably, the amount given refers to the sum of all inorganic pigments B present in the inventive thermoplastic moulding composition. The inorganic pigment B may be utilized as pure colorant or as colorant composition, e.g. as a masterbatch, wherein the amounts given above refer to the pure inorganic pigment B compound.

Preferably, the at least one inorganic pigment B comprises at least one mixed metal oxide or mixed metal oxosulfide B1, comprising the metals niobium (Nb), tin (Sn) and zinc (Zn), wherein the mixed metal oxide or mixed metal oxosulfide B1 has a pyrochlore type structure. More preferably, the inorganic pigment B comprises Nb/Sn/Zn oxosulfide having pyrochlore type structure as inorganic pigment B1, for example Pigment Yellow 227 (e.g. commercially available as YL0010P150/Yellow 10P150 from Shepherd Color Company).

Mixed oxides and oxosulfides having pyrochlore structure, such as Sn/Nb pyrochlore Sn₂Nb₂O₇ and mixed oxides and oxosulfides having partially substitution on the divalent site of Sn₂Nb₂O₇, e.g. Sn/Zn/Nb pyrochlore, as well as their preparation are for example described in WO 2011/156362 and WO 2014/160218. Typically, such mixed metal oxides and oxosulfides may be prepared via high temperature calcination, typically at temperatures in the range of 800 °C to 1000 °C, using oxides and/or other salts, such as sulphides or carbonates, of the respective metals. Typically, a premixture of the metal salts and/or metal oxides is prepared and afterwards calcinated, preferably under inter gas.

Preferably, the at least one inorganic pigment B comprises at least one mixed metal oxide or mixed metal oxosulfide B2, comprising the metals titanium (Ti), tin (Sn) and zinc (Zn), wherein the mixed metal oxide or mixed metal oxosulfide B2 has a rutile type structure. More preferably, the inorganic pigment B comprises Ti/Sn/Zn oxide having rutile type structure as inorganic pigment B2, for example Pigment Yellow 216 (e.g. commercially available as OR0010P340 / Orange 10P340 from Shepherd Color Company).

According to a preferred embodiment, the at least one inorganic pigment B1 is selected from pyrochlore type Nb/Sn/Zn oxosulfides, preferably Pigment Yellow 227, and B2 is selected from rutile type Ti/Sn/Zn oxide, preferably Pigment Yellow 216.

### Organic dye C

The inventive thermoplastic moulding composition comprises at least one organic dye C, typically one or more organic dyes C, which is soluble in the polymer matrix A. Preferably, the at least organic dye C is present in an amount of 0.00001 to 5.0 wt.-% preferably from 0.0001 to 4.0 wt.-%, more preferably from 0.001 to 3.0 wt.-%, also preferably from 0.01 to 2.0 wt.-%, based on the total thermoplastic moulding composition. Preferably, the amounts as given refer to the sum of all organic dyes C present in the inventive thermoplastic moulding composition. The organic dye C may be utilized as pure colorant or as colorant composition, e.g. as a masterbatch, wherein the amounts given above refer to the pure organic dye compound.

Preferably, the at least one organic soluble dye C is solved and monomolecular dispersed in the polymer matrix A. Also preferably, a composition comprising the polymer matrix A and solely (meaning without the inorganic pigment B and without other components) the soluble organic dye(s) C in an amount of 0.5 wt.-%, preferably in an amount of 1 wt.%, based on the composition, exhibits a haze (measured at 23 °C, according to standard ASTM D1003, using test specimens having a thickness of 1 mm) of equal or less than 5 % (<=5 %), preferably of equal or less than 4 % (<=4 %).

Typically, the at least one organic dye C may be selected from commonly known dyes suitable for colouring thermoplastic polymers, such as polymethylmethacrylates, polycarbonates, polystyrene and polystyrene copolymers, e.g. styrene-acrylonitrile copolymer. In particular, the at least one organic dye C is selected from yellow, orange, red and brown organic dyes. According to a preferred embodiment, the at least one organic dye C is selected from monoazo dyes, perinone dyes, quinophthalone dyes, anthraquinone dyes and pyrazolone dyes. More preferably, the organic dye C is selected from monoazo dyes, perinone dyes, and anthraquinone dyes. Particularly, the organic dye C includes at least one monoazo dye and/or at least one perinone dye.

Generally, suitable monoazo dyes as such are well-known to a skilled person and are derivatives of diazene (diimide), HN=NH, wherein both hydrogens are substituted by aromatic or heteroaromatic moieties, (IUPAC Recommendations 1995, published in Pure & Appl. Chem., Vol. 67, No. 819, pp. 1307-1375, 1995). In other words, chemical structures of all monoazo dyes comprise one chemical moiety -N=N-.

The term "heteroaromatic moiety" as used in the present application is well-known and typically refers to a 5- or 6-membered aromatic moiety comprising at least one heteroatom in its structure. Normally, the heteroatom is an N, O, S, Se or Te atom, more preferably an N, O or S atom, and still more preferably an N atom. Specific examples of the heteroaromatic moiety include, for example, furan, thiophene, pyran, pyrrole, imidazole, pyrazole, 3H-pyrazol-3-one, pyrazolin-5-one, pyridine, pyrazine, pyrimidine, pyridazine, thiazole, oxazole, isothiazole, isoxazole, thiadiazole, oxadiazole, triazole, selenazole and tellurazole. Further examples of the heteroaromatic moiety include, for example, indolizine, purine, pteridine, carboline, pyrroloimidazole, pyrrolotriazole, pyrazoloimidazole, pyrazolotriazole, pyrazolopyrimidine, pyrazolotriazine, triazolopyridine, tetraazaindene, imidazoimidazole, imidazopyridine, imidazopyrazine, imidazopyrimidine, imidazopyridazine, oxazolopyridine, oxazolopyrazine, oxazolopyrimidine, oxazolopyridazine, thiazolopyridine, thiazolopyrazine, thiazolopyrimidine, thiazolopyridazine, pyridinopyrazine, pyradinopyrazine, pyradinopyridazine, naphthyridine, imidazotriazine and 1H-perimidin.

The heteroaromatic moiety is normally substituted by one or several substituents which may be alkyl, alkenyl, alkynyl, aryl, amino, alkoxyl, aryloxy, acyl, alkoxycarbonyl, aryloxycarbonyl, acyloxy, acylamino, alkoxycarbonylamino, aryloxycarbonylamino, sulfonylamino, sulfamoyl, -carbamoyl, alkylthio, arylthio, sulfonyl, cyano and heterocyclic groups and halogen atoms. More preferable are alkyl, alkenyl, aryl, alkoxyl, aryloxy, cyano and heterocyclic groups and halogen atoms, still more preferably alkyl, aryl, alkoxyl, aryloxy and aromatic heterocyclic groups, and particularly preferably are alkyl, aryl, alkoxyl and aromatic heterocyclic groups.

Specific examples of monoazo dyes for use in the present invention include but are not limited to: Solvent Red 195 (cyano-5-[[5-cyano-2,6-bis[(3-methoxypropyl)amino]-4-methylpyridin-3-yl]azo]-3-methyl-2-thiophenecarboxylic acid methyl ester);
Disperse Yellow 241 (5-[(3,4-dichlorophenyl)azo]-1,2-dihydro-6-hydroxy-1,4-dimethyl-2-oxonicotinonitrile);
Solvent Yellow 16 (5-methyl-2-phenyl-4-phenylazo-4H-pyrazol-3-one);
Solvent Yellow 18 (4-[(2,4-dimethylphenyl)azo]-2,4-dihydro-5-methyl-2-phenyl-3H-pyrazol-3-one);
Solvent Yellow 21 (3-[(1-oxonaphthalen-2-ylidene)methylhydrazinylidene]-1-prop-2-enylindol-2-one);
Solvent Yellow 72 (4-((o-methoxyphenyl)azo)-3-methyl-1-phenyl-2-pyrazolin-5-one);
Solvent Yellow 82, Solvent Yellow 21 (bis[2-[(4,5-dihydro-3-methyl-5-oxo-1-phenyl-1H-pyrazol-4-yl)azo]benzoato(2-)]chromat);
Solvent Yellow 16 (5-methyl-2-phenyl-4-phenylazo-4H-pyrazol-3-one);
Solvent Black 3 (2,3-dihydro-2,2-dimethyl-6-((4-(phenylazo)-1-naphthyl)azo)-1H-perimidin).

Anthraquinone dyes are dyes having at least one anthraquinone moiety in their structure. Examples of suitable anthraquinone dyes include (colour index C.I.) Solvent Yellow 117, 163, 167, 189; Solvent Orange 77, 86; Solvent Red 111, 143, 145, 146, 150, 151, 155, 168, 169, 172, 175, 181, 207, 222, 227, 230, 245, 247; Solvent Violet 11, 13, 14, 26, 31, 36, 37, 38, 45, 47, 48, 51, 59, 60; Solvent Blue 14, 18, 35, 36, 45, 58, 59, 59: 1, 63, 68, 69, 78, 79, 83, 94, 98, 100, 101, 102, 104, 105, 111, 112, 122, 128, 132, 136, 139; Solvent Green 3, 28, 29, 32, 33; Acid Red 80; Acid Green 25, 27, 28, 41; Acid Violet 34; Acid Blue 25, 27, 40, 45, 78, 80, 112; Disperse Yellow 51; Disperse Violet 26, 27; Disperse Blue 1, 14, 56, 60; Direct Blue 40; Modern Red 3, 11; and Modern Blue 8.

Examples of perinone dyes which are suitable for use in the present invention include (colour index C.I.) Solvent Orange 60, 78, 90; Solvent Red 135, 162, 179; Solvent Violet 29 and the like.

Suitable quinophthalone dyes include (colour index C.I.) Solvent Yellow 33, 114, 128, 129, Disperse Yellow 14, 49, 54 and the like.

Suitable pyrazolone dyes include for example Solvent Yellow 93 (4-(4,5-Dihydro-1-phenyl-3-methyl-5-oxo-1H-pyrazole-4-ylidenemethyl)-1-phenyl-3-methyl-1H-pyrazole-5(4H)-one). Often pyrazolone dyes also includes an monazo group as defined above and may be mentioned as preferred examples of monoazo dyes.

In a preferred embodiment the at least one organic dye C is selected from:
Solvent Yellow 16 (5-methyl-2-phenyl-4-phenylazo-4H-pyrazol-3-one);
Solvent Yellow 18 (4-[(2,4-dimethylphenyl)azo]-2,4-dihydro-5-methyl-2-phenyl-3H-pyrazol-3-one);
Solvent Yellow 21 (3-[(1-oxonaphthalen-2-ylidene)methylhydrazinylidene]-1-prop-2-enylindol-2-one);
Solvent Yellow 72 (4-((o-methoxyphenyl)azo)-3-methyl-1-phenyl-2-pyrazolin-5-one);
Solvent Yellow 82, Solvent Yellow 16 (5-methyl-2-phenyl-4-phenylazo-4H-pyrazol-3-one);
Solvent Yellow 93 (4-(4,5-Dihydro-1-phenyl-3-methyl-5-oxo-1H-pyrazole-4-ylidenemethyl)-1-phenyl-3-methyl-1H-pyrazole-5(4H)-one);
Solvent Yellow 114 (2-(3-hydroxyquinolin-2-yl)indan-1,3-dione);
Solvent Yellow 163 (1,8-Bis(phenylthio)anthraquinone);
Disperse Yellow 241 (5-[(3,4-dichlorophenyl)azo]-1,2-dihydro-6-hydroxy-1,4-dimethyl-2-oxonicotinonitrile);
Solvent Orange 60 (12H-phthaloperin-12-one);
Solvent Orange 116 (4-Methyl-2,6-bis-p-tolylamino-5-(2-trifluoromethyl-phenylazo)-nicotinonitrile); Solvent Red 195 (cyano-5-[[5-cyano-2,6-bis[(3-methoxypropyl)amino]-4-methylpyridin-3-yl]azo]-3-methyl-2-thiophenecarboxylic acid methyl ester);
Solvent Red 52 (3-Methyl-6-[(4-methylphenyl)amino]-3H-naphtho[1,2,3-de]quinoline-2,7-dione); and
Solvent Red 135 (8,9,10,11-tetrachloro-12H-phthaloperin-12-one);
Solvent Green 28 (1,4-bis-(4-butyl-phenylamino)-5,8-dihydroxy-anthraquinone);
Solvent Green 3 (1,4-bis(p-tolylamino)anthraquinone);
Solvent Blue 104 (1,4-bis(mesitylamino)anthraquinone);
Solvent Violet 59 (1,4-diamino-2,3-diphenoxyanthraquinone);
Solvent Violet 13 (1-hydroxy-4-(4-methylanilino)anthracene-9,10-dione);
Solvent Black 3 (2,3-dihydro-2,2-dimethyl-6-((4-(phenylazo)-1-naphthyl)azo)-1H-perimidin).

Especially, the organic dye C comprises at least one organic dye, selected from yellow, orange, red and brown organic dyes, preferably as described above, and optionally at least one organic dye, selected from green, blue, violet and black organic dyes, preferably as described above, as a shading component. Typically, said shading component, selected from green, blue, violet and black organic dyes, may be present in an amount of up to 10 wt.-%, preferably from 0.01 to 10 wt.-%, based on the total organic dye C (i.e. based on the total amount of pure organic dyes). In particular, the organic dye C comprises at least 80 wt.-%, more preferably at least 90 wt.-%, even more preferably from 90 to 100 wt.-%, based on the total organic dye C (i.e. based on the total amount of pure organic dyes), of organic dyes selected from yellow, orange, red and brown organic dyes, preferably selected from yellow, orange, and red organic dyes, typically as described above.

More preferably, the at least one organic dye C is selected from:
Solvent Yellow 93 (4-(4,5-Dihydro-1-phenyl-3-methyl-5-oxo-1H-pyrazole-4-ylidenemethyl)-1-phenyl-3-methyl-1H-pyrazole-5(4H)-one);
Solvent Orange 60 (12H-phthaloperin-12-one);
Solvent Orange 116 (4-Methyl-2,6-bis-p-tolylamino-5-(2-trifluoromethyl-phenylazo)-nicotinonitrile);
Solvent Red 195 (cyano-5-[[5-cyano-2,6-bis[(3-methoxypropyl)amino]-4-methylpyridin-3-yl]azo]-3-methyl-2-thiophenecarboxylic acid methyl ester);
Solvent Red 52 (3-Methyl-6-[(4-methylphenyl)amino]-3H-naphtho[1,2,3-de]quinoline-2,7-dione); and
Solvent Red 135 (8,9,10,11-tetrachloro-12H-phthaloperin-12-one).

According to a preferred embodiment, the at least one organic dye C comprises (preferably is composed of) Solvent Red 195 and/or Solvent Red 135, and preferably the thermoplastic moulding composition shows a red colour impression.

According to another preferred embodiment, the at least one organic dye C comprises (preferably is composed of) Solvent Orange 60, and preferably the thermoplastic moulding composition shows an orange colour impression.

### Additional components D

The inventive thermoplastic moulding composition may also comprise one or more additional optional components D, for example organic pigments, inorganic pigments different from B, scattering particles, impact modifiers, and other commonly known additives and auxiliaries. For example, commonly known additives and auxiliaries may be selected from antistatic agents, antioxidants, moulding-release agents, flame retardants, lubricants, flow improvers, fillers, UV absorbing agents, light stabilizers and organophosphorus compounds, such as phosphites or phosphonates, pigments, agents providing weathering resistance and plasticizers. The choice and amounts of additives can be adjusted in accordance to the intended use.

In a preferred embodiment the inventive thermoplastic moulding composition comprises at least one additional additive D, selected from pigments, especially organic pigments and/or inorganic pigments different from B, scattering particles, impact modifiers, antistatic agents, antioxidants, moulding-release agents, flame retardants, lubricants, flow improvers, fillers, UV absorbing agents, light stabilizers and organophosphorus compounds, such as phosphites or phosphonates, agents providing weathering resistance and plasticizers.

Typically, the optional additional component D, the additional component D is present in an amount from 0.00001 to 50.0 wt.-%, preferably from 0.00001 to 40.0 wt.-%, also preferably from 0.00001 to 30.0 wt.-%, also preferably 0.0001 to 20 wt.%, also preferably 0.001 to 10 wt.-%, based on the total thermoplastic moulding composition. Generally, the choice and amounts of additives can be adjusted in accordance to the intended use. Colorimetric values and weathering stability of the resulting coloured moulding composition should not be excessively impaired by these additives.

For example, the inventive thermoplastic moulding composition may optionally comprise one or more colorant, different from B and C, as additional component D. For example, such additional colorant may be selected from organic pigments and/or inorganic pigments different from B. Examples of suitable pigments used as optional additional component D include barium sulphate, zinc oxide, iron oxides (e.g. pigments of type Bayferrox^{®} from Lanxess), magnesium titanate, calcium sulphate, calcium carbonate, magnesium carbonate, titanium dioxide, carbon black, ultramarine blue, and also the entire class of organic pigments. Typically, suitable organic pigments may be selected from phthalocyanines (e.g. Cu phthalocyanines), benzimidazolone pigments, e.g. Pigment Yellow 151; isoindoline derivatives, e.g. Pigment Yellow 139; diazo pigments, e.g. Pigment Red 242; and anthraquinone pigments, e.g. Pigment Yellow 147 (1-({4-[(9,10-dioxo-9,10-dihydroanthracen-1-yl)amino]-6-phenyl-1,3,5-triazin-2-yl}amino)-9,10-dihydroanthracene-9,10-dione).

Phthalocyanines (or referred to as phthalocyanine pigments) for use in the present invention are not particularly limited and may be selected from metal-free phthalocyanines, cobalt phthalocyanines, copper phthalocyanines, nickel phthalocyanines, iron phthalocyanines, manganese phthalocyanines and zinc phthalocyanines, more preferably from copper phthalocyanines. In particular, suitable copper phthalocyanine pigments may be selected from Pigment Blue 1, 2, 15, 15:1, 15:2, 15:3, 15:4, 15:6, 16, 17:1, 56, 60, and 63 as well as Pigment Green 7 and 36.

Preferably, pigments used as optional additional component D may be selected from barium sulphate, metal oxides, preferably zinc oxide, iron oxides, and/or titanium dioxide; phthalocyanines (e.g. Cu phthalocyanines), and Pigment Yellow 147.

According to a preferred embodiment, the inventive thermoplastic moulding composition is free of carbon black and/or white inorganic pigments, such as titanium dioxide.

### Scattering particles

In some embodiments of the present invention, the thermoplastic moulding composition may further comprise organic and/or inorganic scattering particles as further component D, wherein said scattering particles are typically dispersed in the polymer matrix A. Although the choice of the scattering particles is not particularly limited, they are typically selected in such a way that the refractive index of the scattering particles differs from that of the polymer matrix by at least 0.01. The refractive index can be measured at the Na D-line at 589 nm at 23 °C as specified in the standard ISO 489 (1999). Typically, scattering particles may be present in an amount of 0.1 to 25 wt.-%, based on the total thermoplastic moulding composition.

The scattering particles usually have a weight average particle diameter of from 0.01 µm to 100.0 µm. The weight average particle diameter - indicated as so-called volume averaged d₅₀-value (that is 50 percent by volume of the particles have a particle size below the specified average particle size) of the scattering particles can be determined by a method known to a skilled person, e.g. by photon correlation spectroscopy according to the standard ISO 13320-1 (2009) upon using a commercially available instrument, such as LS 13 320 Laser Diffraction Particle Size Analyzer from Beckman Coulter Inc. Typically, the size of the scattering particles is determined in each case in dry powder form by laser light scattering (at room temperature, 23 °C) using Beckman Coulter LS 13 320 laser diffraction particle size analyser, tornado dry powder system. The measurement is carried out as described in the manual. For computer-aided analysis model Mie is used.

In a preferred embodiment, the scattering particles are dispersed in polymer matrix A, wherein the scattering particles have a weight average particle diameter of from 0.01 µm to 100.0 µm and refractive index of the scattering particles differs from that of the polymer matrix by at least 0.01.

Inorganic scattering particles may include traditional inorganic opacifiers, e.g. barium sulphate, calcium carbonate, titanium dioxide or zinc oxide.

Organic scattering particles are typically spherical scattering beads consisting of a cross-linked polymeric material such as poly alkyl(meth) acrylates, silicones, polystyrenes etc. For the purposes of the present invention, the term "spherical" means that the scattering beads preferably have a spherical shape, but it is clear to the person skilled in the art that, as a consequence of the methods of production, it is also possible that scattering beads with some other shape may be present, or that the shape of the scattering beads may deviate from the ideal spherical shape. The term *"spherical"* therefore indicates that the ratio of the largest dimension of the scattering beads to the smallest dimension is not more than 4, preferably not more than 2, each of these dimensions being measured through the centre of gravity of the scattering beads. Based on the number of scattering beads, at least 70% are preferably spherical, particularly at least 90%.

Preferred scattering beads composed of crosslinked polystyrenes are commercially available from Sekisui Plastics Co., Ltd. with the trademarks Techpolymer^{®} SBX-4, Techpolymer^{®} SBX-6, Techpolymer^{®} SBX-8 and Techpolymer^{®} SBX-12.

Other particularly preferred spherical plastics particles which are used as scattering agents comprise cross-linked silicones. Silicone scattering agents particularly preferably used in the present invention are obtainable from Momentive Performance Materials Inc. as TOSPEARL^{®} 120 and TOSPEARL^{®} 3120.

### Impact modifiers

Mechanical properties of the inventive thermoplastic moulding composition may be additionally adjusted to the desired purpose if the thermoplastic moulding composition comprises one or more impact modifiers as further component D. Typically, impact modifiers may be present in an amount of 5.0 to 50.0 wt.-%, preferably 10.0 to 40.0 wt.-%, based on the total thermoplastic moulding composition.

Impact modifiers for use in the present invention are well known and may have different chemical compositions and different polymer architectures. The impact modifiers may be crosslinked or thermoplastic. In addition, the impact modifiers may be in particulate form, as core-shell or as core-shell-shell particles. Typically, particulate impact modifiers have an average particle diameter in the range of 20 nm to 500 nm, preferably of 50 nm to 450 nm, more preferably of 100 nm to 400 nm and most preferably of 150 nm to 400 nm. "Particulate impact modifiers" in this context means crosslinked impact modifiers which generally have a core, core-shell, core-shell-shell or core-shell-shell-shell structure. Average particle diameter of particulate impact modifiers can be determined by a method known to a skilled person, e.g. by photon correlation spectroscopy according to the norm DIN ISO 13321 : 1996.

Further preferred impact modifiers are polymer particles which can have core-shell or core-shell-shell structures, and which are obtained by emulsion polymerization (see, for example, EP-A 0 113 924, EP-A 0 522 351, EP-A 0 465 049 and EP-A 0 683 028). The present invention typically requires suitable average particle diameter of these core-shell or core-shell-shell polymer particles in the range from 20 nm to 500 nm, preferably of 50 nm to 450 nm, more preferably of 150 nm to 400 nm and most preferably of 200 nm to 400 nm.

Typically, suitable core-shell particles include a soft elastomeric core, for example based on crosslinked butyl acrylate, and a hard outer shell, typically based on same or similar monomers as the matrix, e.g. based on methyl methacrylate, and optionally suitable comonomers, e.g. methyl acrylate and/or ethyl acrylate. A three-layer or three-phase structure with a core and two shells can be prepared as follows. The innermost (hard) shell can, for example, be composed of methyl methacrylate, of small proportions of comonomers, e.g. ethyl acrylate, and of a proportion of crosslinking agent, e.g. allyl methacrylate. The middle (soft) elastomeric shell can, for example, be composed of a copolymer comprising butyl acrylate and, if appropriate, styrene, while the outermost (hard) shell is the same as the matrix polymer, thus bringing about compatibility and good linkage to the matrix. The proportion of polybutyl acrylate in the elastomeric phase of the impact modifier, e.g. in the soft core of a two-layer core-shell structure or in the middle elastomeric shell of a three-layer core-shell structure, is decisive for the impact-modifying action and is preferably in the range from 20.0 wt.-% to 99.0 wt.-%, particularly preferably in the range from 30.0 wt.-% to 98.0 wt.-%, even more preferably in the range from 40.0 wt.-% to 97.0 wt.-%, based on the total weight of the elastomeric phase.

Thermoplastic impact modifiers have a different mechanism of action than particulate impact modifiers. They are generally mixed with the matrix material. In the case that domains are formed, as occurs, for example, in the case of use of block copolymers, preferred sizes for these domains, the size of which can be determined, for example, by electron microscopy, correspond to preferred sizes for the core-shell particles.

There are various classes of thermoplastic impact modifiers. One example thereof are aliphatic thermoplastic polyurethanes (TPUs) e.g. Desmopan^{®} products commercially available from Covestro AG. For instance, the TPUs Desmopan^{®} WDP 85784A, WDP 85092A, WDP 89085A and WDP 89051D, all of which have refractive indices between 1.490 and 1.500, are particularly suitable as impact modifiers.

A further class of thermoplastic impact modifiers are methacrylate-acrylate block copolymers, especially acrylic TPE, which comprises PMMA-poly-n-butyl acrylate-PMMA triblock copolymers, and which are e.g. commercially available under the Kurarity^{®} product name by Kuraray. The poly-n-butyl acrylate blocks form nanodomains in the polymer matrix having a size between 10 nm and 20 nm.

### Colouring composition and process for its production

In another aspect the present invention is directed to a colouring composition, preferably a masterbatch or a liquid colouring composition, comprising
at least one inorganic pigment B as defined above, selected from mixed metal oxide or mixed metal oxosulfide B1, comprising the metals niobium (Nb), tin (Sn) and zinc (Zn);
and/or from mixed metal oxide or mixed metal oxosulfide B2, comprising the metals titanium (Ti), tin (Sn) and zinc (Zn);
at least one organic dye C as defined above, preferably selected from monoazo dyes, perinone dyes, quinophthalone dyes and anthraquinone dyes; and
a dispersing medium, typically a solid dispersing medium comprising at least one thermoplastic polymer, especially a thermoplastic polymer as describe above, or a liquid dispersing medium.

The definitions and embodiments as described above in connection to the inventive thermoplastic moulding composition apply accordingly. In particular, the description of the components A, B, C and optional D applies to the inventive colouring composition accordingly.

A masterbatch is understood to mean a solid or waxy formulation comprising the colouring components B and C and a solid dispersing medium. Typically, the solid dispersing medium may be selected from thermoplastic polymers, e.g. as describe above, and waxes, such as commonly known natural or synthetic waxes. The concentration of the colouring components B and C in the masterbatch is adjusted such that the desired colour impression arises when the masterbatch is used for preparing the inventive coloured thermoplastic moulding composition. For example, the masterbatch may be a polymer granulate or a polymer powder.

A liquid colouring composition is understood to mean a colouring composition comprising a liquid dispersing medium. For example, the liquid colouring medium may be a solution, dispersion, a gel, or a pasty-like composition. Preferably, the liquid colouring composition is a dispersion of the colouring components B and C in an aqueous dispersing medium comprising at least one dispersing agent. The concentration of the colouring components B and C in the liquid colouring composition is adjusted such that the desired colour impression arises when the liquid colouring composition is used for preparing the inventive coloured thermoplastic moulding composition.

In a preferred embodiment, the inventive colouring composition is a masterbatch comprising, each based on the total masterbatch:
from 0.01 to 40.0 wt.-%, preferably from 5.0 to 30.0 wt.-%, of the at least one inorganic pigment B as defined above;
from 0.01 to 40.0 wt.-%, preferably from 5.0 to 30.0 wt.-%, of the at least one organic dye C as defined above;
from 30.0 to 99.98 wt.-%, preferably from 50.0 to 90.0 wt.-%, of a solid dispersing medium, comprising (preferably essentially consists of) at least one thermoplastic polymer and/or at least one wax; and
from 0.0 to 10.0 wt.-%, preferably from 0.0 to 5.0 wt.-%, of one or more auxiliary additive.

Preferably, the solid dispersing medium is selected from thermoplastic polymers as described above and commonly known natural or synthetic waxes. The choice of the thermoplastic polymer in the masterbatch is not particularly limited, as long as the thermoplastic polymer is suitable for colouring and thermoplastic processing, in particular for injection moulding and extrusion. Preferably, the thermoplastic polymer in the masterbatch is substantially the same as in the inventive thermoplastic moulding composition described above For instance, thermoplastic polymer may be advantageously selected from the group consisting of polyalkyl (meth)acrylate, polymethyl (meth)acrylimide, polyalkyl (meth)acrylate copolymers, polystyrene, polystyrene copolymer, acrylonitrile copolymers, polycarbonates, polyester (preferably polyethylene terephthalate), polyamides, polyvinylidene fluoride or mixtures thereof.

The choice of waxes in the masterbatch is not particularly limited, as long as the natural or synthetic waxes are suitable for colouring and thermoplastic processing, in particular for injection moulding and extrusion. For instance, natural waxes include waxes derived from animal, vegetable and mineral sources and chemical modified natural waxes, wherein animal waxes, for example, include beeswax, lanolin, lanocerin, and shellac waxes, vegetable waxes, for example, include soy, carnauba, candellila, jojoba, and ouricouri waxes, and mineral waxes, for example, include petroleum waxes and earth or fossil waxes, such as paraffin, petrolatum, and montan waxes. For instance, synthetic waxes are man-made waxes, and may be derived from such sources as hydrocarbon, alcohol, glycol, amines, amides or esters. Synthetic waxes, for example, include polyolefine waxes, polytetrafluoroethylene, Fischer-Tropsch waxes, synthetic triglycerides, salts of fatty acids (e.g. calcium montanate), solid fatty acid esters (e.g. esters of ethylene glycol, butylene glycol, or sorbitol with C16-C32 fatty acids, such as palmitic acid, stearic acid, or montanic acid), wax esters (e.g. esters of a fatty acids and a fatty alcohol, such as stearylstearate), fatty acid amines, fatty amides, polyamide waxes, as well as chlorinated and other chemically modified waxes.

The optional auxiliary additive may be selected from additives and auxiliaries, described as additional component D above. For example, the auxiliary additive may be selected from antistatic agents, antioxidants, moulding-release agents, lubricants, flow improvers, fillers, UV absorbing agents, light stabilizers and organophosphorus compounds, such as phosphites or phosphonates. The choice and amounts of additives can be adjusted in accordance to the intended use. Also, the masterbatch may comprise one or more further colourants in addition to the colouring components B and C, for example an organic pigment or an inorganic pigment different from B, as described above.

In another preferred embodiment, the inventive colouring composition is a liquid colouring composition comprising, each based on the total liquid colouring composition:
from 0.5 to 50.0 wt.-%, preferably from 5.0 to 40.0 wt.-%, of the at least one inorganic pigment B as defined above;
from 0.5 to 50.0 wt.-%, preferably from 5.0 to 40.0 wt.-%, of the at least one organic dye C as defined above;
from 1.0 to 30.0 wt.-%, preferably from 5.0 to 25.0 wt.-%, of at least one dispersing agent;
from 48.0 to 98.0 wt.-%, preferably from 48.0 to 85.0 wt.-%, of a liquid dispersing medium, such as demineralized water and/or an organic solvent; and
from 0.0 to 50.0 wt.-%, preferably from 0.0 to 10.0 wt.-%, more preferably from 0.0 to 5.0 wt.-%, of one or more auxiliary additive.

Typically, the amount of the liquid dispersing medium is adjusted so that the portions by weight of the components of the liquid colouring composition add up to 100 wt.-%.

Typically, the liquid dispersing medium may be selected from water or mixtures of water with one or more polar organic solvents, that are miscible with water, e.g. alcohols, esters, ketones, amides, sulfoxides, and mixtures thereof. Further, the liquid dispersing medium may be selected from organic solvents. Examples of an organic solvent include commonly known organic solvents, such as acetone, methyl ethyl ketone, methyl-n-butyl ketone, methyl isobutyl ketone, ethyl isobutyl ketone, tetrahydrofuran, dioxane, dimethylformamide, diethylformamide, dimethylacetamide, diethylacetamide, N-methyl pyrrolidone, methanol, ethanol, isopropanol, ethylene glycol, propylene glycol, 2-methoxy-2-propanol and tetraglyme or mixtures thereof.

The choice of the dispersing agent is not particularly limited as long as the additive does not adversely affect properties of the resulting coloured moulding composition. The use of pH-independent dispersing agents is preferred. For example, the dispersing agent may be selected from commonly known surfactants and/or protective colloids. Suitable surfactants include anionic, cationic, non-ionic surfactants and compatible mixtures thereof. Examples of suitable conventional anionic surfactants are the alkali metal and ammonium salts of alkyl sulfates, typically having C8-C12 alkyl radicals (e.g. sodium lauryl sulfate), of sulfuric acid hemi-esters of ethoxylated alkanols, typically having C12-C18 alkyl radical (e.g. sodium lauryl ether sulfate), and of ethoxylated alkylphenols, typically having C4-C12 alkyl radicals, and of alkylsulfonic acids, typically having C12-C18 alkyl radical. Examples of conventional non-ionic emulsifiers are oxylated mono-, di- and trialkylphenols, and also ethoxylated fatty alcohols. Examples of cationic emulsifiers are inter alia phosphonium salts, sulfonium salts, tropylium salts, morpholinium salts, oxazolinium salts, imidazolinium salts, pyridinium salts, and primary, secondary, tertiary, or quaternary ammonium salts, typically having C8-C18 alkyl, alkylaryl, or heterocyclic radicals.

For instance, the dispersing agent may be a high molecular weight copolymer comprising at least maleic anhydride, styrene and an amino polyether as monomer units. Alternatively, the dispersing agent may also be a copolymer of methacrylic acid with hydrophobic methacrylates. The term "hydrophobic methacrylates" as used herein preferably refers to esters of methacrylic acid with alcohols having at least 3 and not more than 24 carbon atoms. Still, the dispersing agent can be a copolymer of polyethers, preferably ethylene oxide, propylene oxide and/or butylene oxide, and styrene oxide.

Suitable dispersing agents include, for example, a polyacrylate Dispex^{®} Ultra 4550 (former EFKA^{®} 4550) which is commercially available from BASF SE. This polymer consists essentially of the monomers α-methylstyrene, 2-ethylhexyl acrylate and MPEG methacrylate (methoxy-poly-(ethylenglykol)-monomethacrylat). Further examples of suitable dispersing agents are TEGO^{®} Dispers 750W and 755W, available from Evonik Industries AG and Disperbyk^{®} 190 from BYK-Chemie GmbH.

The liquid colouring composition may comprise one or more auxiliary additive, in addition to the dispersing agent. For example, the auxiliary additive may be selected from agents to prevent decay or bacterial decomposition, fungicides, levelling agents, thickeners and defoamers. Also, the liquid colouring composition may comprise one or more further colourants in addition to the colouring components B and C, for example an organic pigment or an inorganic pigment different from B, as described above.

In a preferred embodiment the liquid colouring composition may contain one or more thickeners. Preferred thickeners include inter alia celluloses, especially ethylcellulose. As a further possibility, carboxylate-containing polymers, which are available as water- or alkali-soluble solid products, as colloidal solutions or as aqueous dispersions, for example homo- and copolymers based on vinyl acetate and crotonic acid or partly hydrolysed poly(meth)acrylates may be used as thickeners. Particular preference is given to homo- and copolymers of acrylic acid and/or methacrylic acid in the form of the sodium salts thereof.

Furthermore, the present invention is directed to a process for producing the inventive colouring composition comprising the step of mixing the at least one inorganic pigment B, the at least organic dye C, the dispersing medium, and optionally further components.

Particularly, the invention relates to a process for producing the inventive masterbatch, wherein the inorganic pigment B and the organic dye C and optionally additional components are added to the molten dispersing medium comprising (preferably essentially consists of) at least one thermoplastic polymer. Typically, said process can be carried out by conventional combining, mixing and homogenising processes, such as extrusion, kneading or milling. Further details of such processes are described below in connection with the process for producing the inventive thermoplastic moulding composition. Typically, the inventive masterbatch is obtained in form of a polymer granulate or a polymer powder.

Particularly, the invention relates to a process for producing the inventive liquid colouring composition, wherein the inorganic pigment B and the organic dye C and optionally additional components are added to a liquid phase comprising the liquid dispersing medium and the dispersing agent. Typically, this mixture is homogenously mixed via intensive stirring or any other conventional homogenisation process, such as kneading or milling. Typically, the inventive liquid colouring composition is obtained in form of a solution, dispersion, a gel, or a pasty-like composition.

### Process for producing the inventive thermoplastic moulding composition

The present invention is also directed to a process for producing the thermoplastic moulding composition as described above, wherein the process comprises the following steps:
i. providing a polymer matrix A as defined above, preferably comprising at least one thermoplastic polymer selected from polyalkyl (meth)acrylates (e.g. polymethylmethacrylate PMMA), poly(meth)acrylimides (e.g. polymethyl methacrylimide PMMI), polyalkyl (meth)acrylate copolymers, polystyrene, polystyrene copolymers, acrylonitrile copolymers, polycarbonates (preferably aromatic polycarbonates derived from bisphenols or polycarbonates derived from isosorbide), polyesters (preferably aromatic polyesters, more preferably polyethylene terephthalate), polyamides, polyvinylidene fluoride (PVDF) and polyolefins (e.g. cycloolefin copolymers COC or clearified polypropylene), more preferably selected from polyalkyl (meth)acrylate (e.g. polymethyl(meth)acrylate), polycarbonates (e.g. polycarbonates derived from bisphenols or isosorbide) and styrene-acrylonitrile copolymers (SAN); and
ii. adding to the polymer matrix A from step i) at least one inorganic pigment B as defined above and at least one organic dye C as defined above.

The definitions and embodiments as described above, e.g. description of the components A, B, C and optional D, applies to the inventive process for producing the thermoplastic moulding composition accordingly.

In one embodiment, in step ii) a single colouring composition is added to the polymer matrix, wherein said colouring composition comprises the inorganic pigment B and the organic dye C. Especially, the colouring composition is a masterbatch or a liquid colouring composition as described above. In yet a further embodiment, in the step ii) two or more colouring compositions can be added, wherein the one colouring composition may comprise the inorganic pigment B and the other colouring compositions may comprise the organic dye C. If two or more colouring compositions are added in the step ii), they can be added in any order or simultaneously.

The thermoplastic moulding composition can also be produced by adding the at least one inorganic pigment B as defined above and the at least one organic dye C as defined above directly to the thermoplastic matrix A. Often, the colouring components B and C can be used as obtained from the manufacturer.

Preferably, in step ii) the inorganic pigment B and the organic dye C are added to the molten polymer matrix A. Preferably, step ii) is carried out at a temperature ranging from 150 to 350 °C, preferably from 200 °C to 320 °C, more preferably from 230 °C to 300 °C. Preferably, step ii) is carried out in an extruder, preferably at a temperature ranging from 150 to 350 °C, preferably from 200 °C to 320 °C, more preferably from 230 °C to 300 °C. When the thermoplastic polymer is a polyalkyl (meth)acrylate (e.g. PMMA) and/or polyalkyl (meth)acrylate copolymer, the step ii) is typically carried out in an extruder, preferably at a temperature ranging from 200 °C to 320 °C, more preferably from 230 °C to 300 °C.

More preferably, the inventive process for producing the thermoplastic moulding composition encompasses mixing of the polymer matrix A in molten form with the inorganic pigment B, the organic dye C and optionally additional components D. Typically, such process is carried out in the melt under the action of shear forces. Especially, said process can be carried out by conventional incorporation processes by combining, mixing and homogenising, especially via extrusion, kneading or milling. Optionally, combining and mixing the components B, C and optionally D prior to melt homogenisation are carried out using powder premixtures.

More preferably, the polymer matrix A and the masterbatch, the liquid colouring composition or the neat components B, C and optionally D can be combined, mixed, homogenised (e.g. extruded) in conventional devices such as screw-type extruders (for example twin-screw extruder, ZSK), kneaders, Brabender or Banbury mills. After the extrusion, the extrudate is typically cooled and pelletized. It is also possible for individual components to be premixed and the remaining components subsequently to be added separately and/or likewise as a mixture.

In yet a further embodiment the polymer matrix is provided in form of a melt and the inventive colouring composition, e.g. liquid composition or masterbatch, is added thereto, preferably mixed and homogenised afterwards. It is also possible to prepare a dry mixture of the polymer matrix A, the inorganic pigment B, and the organic dye C and melting the mixture afterwards. Furthermore, it is possible to add the inventive colouring composition to the thermoplastic polymer directly after its manufacturing process.

### Formed article and process for its production

The invention further relates to formed articles made of (or composed of) the inventive thermoplastic moulding composition as described above, preferably the formed articles are extruded articles or moulded articles, especially injection moulded articles. In another aspect, the present invention relates to a process for producing said formed article from the inventive thermoplastic moulding composition, e.g. via injection moulding, extrusion, blow moulding, pressing, calendering, vacuum forming, or a combination thereof.

The definitions and embodiments as described above, for example described in connection with the inventive thermoplastic moulding composition and the inventive colouring composition apply accordingly. In particular, the description of the components A, B, C and optional D applies to the formed article and the process for its production accordingly.

Preferably, the formed article, especially being an injection moulded article, has a complex geometrical shape. In particular the formed article has different wall thicknesses, one or more perforations, at least one non-planar surface or a combination of these features.

In one embodiment, a complex formed article, especially injection moulded article, exhibit differing wall thicknesses that vary within the moulded article, typically vary within the range from 1 to 30 mm. By way of example, the variation in the wall thickness may be stated via the difference between minimum and maximum wall thickness of the formed article, this difference being more than 1 mm, preferably more than 5 mm and particularly preferably more than 10 mm. The maximum-to-minimum wall thickness ratio is preferably in the range > 1:20 and more preferably in the range > 1:10, and is particularly preferably > 1:4, and most preferably > 1:2.

In another embodiment, a complex formed article, especially injection moulded article, exhibit at least one perforation, wherein wall thickness is zero at the site of a perforation and the surrounding region of a perforation may exhibit a uniform or varying wall thickness, typically within the range stated above.

In another embodiment, a complex formed article, especially injection moulded article, exhibit at least one non-planar surface, wherein this surface is preferably of convex or concave design.

Further, the present invention provides a process for producing a formed article from the inventive thermoplastic moulding composition, especially via a thermal forming process or a melt process, especially via extrusion or via injection moulding. Typically, said process applies a temperature in the range of 150 to 350 °C. Typically, the applied temperature depends on the polymer matrix A and the thermal properties of the used thermoplastic polymer.

For example, the invention is directed to a process for producing an injection moulded article, wherein the process comprises a step of injection moulding of the inventive thermoplastic moulding composition as described above, wherein the thermoplastic moulding composition is injected into a mould which can produce the moulded article. Typically, a melt temperature ranging from 150 to 350 °C, preferably 200 °C to 320 °C, more preferably from 230 °C to 300 °C, is applied. Typically, a mould temperature in the range of 50 to 100 °C, preferably 60 to 90 °C, is applied.

Typically, the temperature of the molten thermoplastic moulding composition comprising polyalkyl (meth)acrylates, such as polymethylmethacrylate (co)polymers, is kept from 210 to 270 °C, more preferably from 240 to 250 °C, during the inventive injection-moulding process. Temperature of the injection-moulding nozzle is moreover preferably from 230 to 270 °C, still more preferably from 240 to 250 °C, and the temperature of the injection mould is preferably from 40 to 80 °C, more preferably from 50 to 60 °C. The temperature of the injection-moulding cylinder is preferably from 220 to 260 °C, more preferably from 230 to 250 °C. Typically, the thermoplastic moulding composition is injected with a pressure in the range from 50 to 1000 bar into the mould. One particular embodiment here applies the pressure in stages, the pressure being 50 bar in the first stage and 400 bar in the second stage. The injection rate may also be staged, being in the range from 0.01 m/s to 0.1 m/s in the first stage and from 0.1 m/s to 1 m/s in the second stage, and in the range from 0.05 m/s to 0.5 m/s in a possible third stage. The metering stroke here is preferably from 1 to 4 times the screw diameter.

The process of the present invention is highly suitable for the manufacturing of complex moulded articles, as described above. Thickness differences in the corresponding injection mould, and in particular perforations, i.e. regions around which the melt is injected within the mould, have a marked effect on the rheology of the material as it fills the mould cavity or cavities. For the purposes of the present invention, a complex moulded article is a moulded article which has one or more of the features described above.

A further aspect of the present invention relates to a process for producing an extruded article, wherein the process comprises an extrusion process of the inventive thermoplastic moulding composition at a temperature ranging from 200 °C to 320 °C, preferably from 230 °C to 300 °C, wherein the thermoplastic moulding composition is melted and die-casted to the final article.

Extrusion of thermoplastic polymers is widely known and is described for example in Kunststoffextrusionstechnik II [Plastics extrusion technology II], Hanser Verlag, 1986, p. 125 ff.

In a preferred embodiment, a melt of the thermoplastic moulding composition is extruded from the nozzle of the extruder onto a gap between two calendar rolls. The optimum temperature of the melt depends for example on the composition of the mixture and can therefore vary in wide ranges. For instance, if the thermoplastic polymer is a polyalkyl (meth)acrylate and/or polyalkyl (meth)acrylate copolymer, preferred temperatures at the nozzle entry lie in the range of from 150 to 300 °C, particularly preferably in the range of from 180 to 270 °C and more particularly preferably in the range of from 200 to 220 °C. The temperature of the calendar rolls is preferably less than or equal to 150 °C, preferably between 60 °C and 140 °C.

The invention is illustrated in more detail by the following non-limiting examples.

### Examples

### Test methods

The colorimetric measurements were carried out using a spectral photometer UltraScan^{®} Pro from HunterLab. The colour difference in weathering Xenotest were measurements using spectral photometer Varian Cary 5000.

The standard colour values (X, Y, Z), the colour coordinates (L*, a* and b*) and derived colour values C*_{ab} (Chroma) referred to as C in the following, h_{ab} (hue) referred to as h in the following, and L*_{ab} (luminance) referred to as L* in the following, were determined in accordance to the standard DIN 5033 (2017), Parts 1-4 using standard illumination D65/10°.

All colorimetric measurements were carried out using 3 test plates of 3 mm thickness, standard illumination D65/10° and diffuse:8° geometry. Colorimetric values C, h, L*, a and b were measured in reflexion using diffuse: 8° (di:8°) geometry according to DIN 5033-7 (2017).Transmission Y (D65/10°) was determined in accordance to the standard DIN 5033 (2017), parts 1-4 and 7 using diffuse illumination and direct receiving geometry as well as same geometry as in reflexion.

The weathering Xenotest were carried out with the following parameters:
- Device: Xenotest Beta LM/1
- Filter: Xenochrome 300 filter system, daylight (ISO 4892-2)
- Irradiance: 60 W/m² (300 - 400 nm)
- Temperatures: chamber 38 ± 3°C, black standard 65 ± 3 °C
- Humidity: 65 ± 10% RH
- 102 min dry, 18 min water spray

The colour difference ΔE CIELAB 1976 (D₆₅, 10°) of each sample was determined according to the standard DIN 6174 via reflectance measurement after 3000 h.

Specimens showing in each case after 3000 h a value Δ E above 3 were evaluated as those having a low weathering stability, specimens having Δ E between 2 and 3 were evaluated as those with a moderate weathering stability and specimens having Δ E lower than 2 were evaluated as those with an excellent weathering stability.

### Materials

The following thermoplastic polymers as polymer matrix A, pigments B and dyes C were used in the following examples:

### Polymer matrix A

| | |
|---|---|
| A1 | Polymethyl methacrylate (PMMA), PLEXIGLAS^{®} 7H, commercially available from Röhm GmbH, having a melt volume flow rate MVR (230 °C, 3.8 kg load) of 1.4 cm³/10 min |
| A2 | Polycarbonate (PC), Makrolon^{®} LED 2245, commercially available from Covestro, having melt volume flow rate MVR (300°C 1.2 kg load) of 34 cm³/10 min |
| A3 | Styrene-acrylonitrile copolymer (SAN), Luran^{®} 2560, nature, commercially available from Ineos Styrolution. |

### Inorganic pigments B

| | |
|---|---|
| B1 | Yellow 10P150 from Shepherd Color Company, Pigment Yellow 227, which is a Nb/S/Sn/Zn pigment based on pyroclore structure (used as pure pigment) |
| B2 | Orange 10P340 from Shepherd Color Company, Pigment Yellow 216, which is a Sn/Zn/Ti pigment based on rutile structure (used as pure pigment) |
| B3 | KRONOS^{®} CL 2220 from KRONOS INTERNATIONAL, Inc., titanium dioxide pigment, rutile pigment surface treated with aluminum, silicon and polysiloxane compounds |
| B4 | Heucodur Yellow 6R, Pigment Brown 24, Cr/Sb/Ti mixed oxide based on rutile type, CAS.: 68186-90-3 (used as pure pigment) |

### Organic dyes C

| | |
|---|---|
| C1 | Solvaperm^{®} Orange 3G from Clariant, Solvent Orange 60, CAS 6925-69-5, perinone type dye (used as pure dye or masterbatch based on PMMA with 1 % dye)) |
| C2 | Macrolex^{®} Red EG from Lanxess, Solvent Red 135, CAS 20749-68-2, perinone type dye (used as pure dye or masterbatch based on PMMA with 10 % or 1% dye) |
| C3 | Oracet^{®} Red 454, from BASF, Solvent Red 195, CAS 72968-71-9, monoazo type dye (used as pure dye or masterbatch based on PMMA with 10 % or 1 % dye) |

Test specimens having a thickness of 1 mm, were prepared as described below using moulding compositions of PMMA and 1 wt.-%, based on the moulding composition, of each one of the organic dyes C1, C2 or C3, wherein the masterbatches based on PMMA as received from master batcher were used.

Haze values were measured at 23 °C on said injection moulded specimen having a thickness of 1 mm according to standard ASTM D1003. The results for haze of the specimen comprising organic dyes C are as follows: C1: 1.1 % / C2: 1.0 % / C3: 3.9 %. These low haze values show that the organic dyes C1, C2 and C3 are soluble organic dyes which are dispersed monomolecular in the PMMA matrix which is typical for an organic dye and cannot achieve with pigments, e.g. inorganic pigments B mentioned above.

### Manufacturing of specimen

Coloured moulding compositions of Examples 1 to 15 as described in tables 1, 2 and 3 below were produced in the following manner:
Polymer granules and colouring preparation as received from the manufacturer were used in a tumbling mixer to produce a mixture which was metered by means of a funnel into the feed zone of a single-screw extruder 30 ESE from Herbert Stork Maschinenbau GmbH, Mörfelden. Extrusion took place at 250 °C utilizing an open venting zone. A granulator was connected downstream of the extruder.

In a second processing step, specimens were injection-moulded from the granules thus obtained.

For each example, test specimens having a thickness of 3 mm were injection moulded at 260 °C on Arburg Allrounder 320 C, available from ARBURG GmbH & Co KG, Lossburg, under the following conditions:
Injection time: 0.92 sec
Material temp.: 250 °C
Cylinder temp.: 250 to 220 °C
Mould temp.: 70 °C
Switch from injection to hold pressure at internal mould pressure 600 bar
Total cycle time: 40 sec
Injection moulding with closed venting cylinder.

### Examples 1-7, and 16 / Orange coloured moulding compositions

The following orange coloured moulding compositions were prepared as described above.

**Table 1. Compositions of examples 1-7, 16 (% given as wt.-%)**

| Ex | A | | B [%] | | | C [%] |
|---|---|---|---|---|---|---|
| | | [%] | B2 PY216 | B3 TiO2 | B4 PB24 | C1 SO60 |
| 1* | A1 | 99.4 | 0.6 | | | |
| 2 | A1 | 99.4 | 0.4 | | | 0.2 |
| 3* | A2 | 99.4 | 0.6 | | | |
| 4 | A2 | 99.4 | 0.4 | | | 0.2 |
| 5* | A1 | 98.8 | | | 0.6 | 0.6 |
| 6* | A1 | 99.2 | | 0.2 | | 0.6 |
| 7* | A2 | 99.2 | | 0.2 | | 0.6 |
| 16* | A1 | 99.2 | 0.6 | 0,2 | | |

| | | | | | | |
|---|---|---|---|---|---|---|
| *comparative example ** dosed as masterbatch (PMMA with 10 % dye) | | | | | | |

### Examples 8-15 / Red coloured moulding compositions

The following red coloured moulding compositions were prepared as described above.

**Table 2. Compositions of examples 8-15 (% given as wt.-%)**

| Ex | A | | B [%] | | | | C [%] | |
|---|---|---|---|---|---|---|---|---|
| | | [%] | B2 PY216 | B1 PY227 | B3 TiO2 | B4 PB24 | C2 SR135 | C3 SR195 |
| 8 | A1 | 91.4 | | 0.6 | | | 0.8** | |
| 9 | A1 | 93.4 | 0.6 | | | | 0.6** | |
| 10 | A1 | 95.4 | 0.6 | | | | | 0.4** |
| 11 | A3 | 98.6 | | 0.6 | | | | 0.8 |
| 12 | A2 | 98.8 | 0.6 | | | | | 0.6 |
| 13* | A1 | 91.8 | | | 0.2 | | | 0.8** |
| 14* | A1 | 93.8 | | | 0.2 | | | 0.6** |
| 15* | A1 | 93.4 | | | | 0.6 | | 0.6** |

| | | | | | | | | |
|---|---|---|---|---|---|---|---|---|
| *comparative example ** dosed as masterbatch (PMMA with 10 % dye) | | | | | | | | |

### Test results

Colorimetric tests and weathering stability were determined as described above using injection moulded test specimens of 3 mm thickness.

**Table 3. Colorimetric test results for examples 1-7, 16**

| Ex | Y(D65) [%] | Colour | a* | b* | C* | h | L* | ΔE after 3000h Xenotest |
|---|---|---|---|---|---|---|---|---|
| 1* | 3.3 | orange | 36.33 | 56.14 | 66.9 | 57.1 | 60.2 | 0.1 |
| 2 | 5.4 | orange | 45.78 | 54.40 | 71.1 | 49.9 | 56.6 | 2.8 |
| 3* | 4.1 | orange | 36.70 | 48.68 | 61.0 | 53.0 | 59.0 | 1.4 |
| 4 | 6.3 | orange | 46.20 | 45.80 | 65.1 | 44.8 | 55.3 | 0.7 |
| 5* | 0.9 | orange | 42.34 | 56.90 | 70.9 | 53.3 | 58.8 | 6.4 |
| 6* | 3.1 | orange | 48.97 | 63.60 | 80.3 | 52.4 | 63.5 | 12.8 |
| 7* | 4.0 | orange | 50.77 | 54.55 | 74.5 | 47.1 | 61.4 | 5,4 |
| 16* | - | orange | 28.62 | 45.12 | 53.4 | 57.6 | 69.1 | - |

| | | | | | | | | |
|---|---|---|---|---|---|---|---|---|
| *comparative example | | | | | | | | |

**Table 4. Colorimetric test results for examples 8-15**

| Ex | Y(D65) [%] | Colour | a* | b* | C | h° | L* | ΔE after 3000h Xenotest |
|---|---|---|---|---|---|---|---|---|
| 8 | 0.2 | light red | 48,24 | 30,24 | 56.9 | 32.1 | 42.4 | 1.4 |
| 9 | 0.1 | light red | 44,84 | 25,48 | 51.6 | 29.6 | 38.7 | 0.9 |
| 10 | 0.2 | dark red | 32,03 | 12,69 | 34.5 | 21.6 | 31.2 | 1.6 |
| 11 | 0.03 | dark red | 22,01 | 6,53 | 23 | 16.5 | 31.1 | |
| 12 | 0.1 | dark red | 17,83 | 4,92 | 18.5 | 15.4 | 30.5 | |
| 13* | 0.2 | dark red | 26,15 | 6,01 | 26.8 | 12.9 | 29 | 2.5 |
| 14* | 0.1 | dark red | 29,44 | 6,80 | 30.2 | 13 | 30 | 2.5 |
| 15* | 0.03 | dark red | 30,09 | 10,41 | 31.8 | 19.1 | 31.6 | 4.0 |

| | | | | | | | | |
|---|---|---|---|---|---|---|---|---|
| *comparative example (L* > 38 light red / L* < 33 dark red) | | | | | | | | |

The inventive moulding compositions according to examples 2 and 4 exhibit a higher colour brilliance (Chroma C*) compared to the moulding compositions according to examples 1 and 3 due to the addition of a solvent dye (i.e. Solvent Orange 60). This effect is shown for PMMA (examples 1 and 2) as well as PC (examples 3 and 4).

The comparative example 5, which utilizes the comparative yellow/brown pigment Pigment Brown 24, which is also based on mixed metal oxide of rutile type (Cr/Sb/Ti mixed oxide), exhibit a lower colour brilliance (Chroma C*) compared to inventive example 2 although the amount of the soluble dye is three times higher.

The comparative examples 6 and 7, which utilize a combination of titanium dioxide and the solvent dye Solvent Orange 60, exhibit a higher colour brilliance (Chroma C*) compared to inventive example 2 but the weathering stability is significantly lower (see table 4 below).

The comparative example 16, which utilizes a combination of pigment B2 (PY216) and titanium dioxide pigment B3 exhibit a lower colour brilliance (Chroma C*) compared to inventive example 2 which utilize the inventive combination of B2 (PY216) and soluble organic dye (i.e. soluble organic dyes).

The inventive examples 8-10 directed to PMMA based moulding compositions show higher colour brilliance compared to example 15, which utilizes the common mixed metal oxide of rutile type Pigment Brown 24 (Cr/Sb/Ti mixed oxide), as well as compared to examples 13 and 14 which utilize titanium dioxide in combination with the red solvent dyes.

The lower Croma values in inventive examples 11 and 12 are caused by the different polymer matrix (SAN and PC).

## Claims

1. Thermoplastic moulding composition comprising:
A. a polymer matrix A comprising at least one thermoplastic polymer;
B. at least one inorganic pigment B selected from mixed metal oxides or mixed metal oxosulfides B1, comprising the metals niobium, tin and zinc; and/or from mixed metal oxides or mixed metal oxosulfides B2, comprising the metals titanium, tin and zinc;
C. at least one organic dye C.

2. Thermoplastic moulding composition according to Claim 1, wherein the thermoplastic moulding composition comprises, each based on the total thermoplastic moulding composition:
A. from 49.99998 to 99.99998 wt.-%, preferably from 59.9998 to 99.9998 wt.-%, more preferably from 89.998 to 99.998 wt.-%, of the polymer matrix A;
B. from 0.00001 to 5.0 wt.-% preferably from 0.0001 to 4.0 wt.-%, more preferably from 0.001 to 3.0 wt.-%, of the at least one inorganic pigment B;
C. from 0.00001 to 5.0 wt.-% preferably from 0.0001 to 4.0 wt.-%, more preferably from 0.001 to 3.0 wt.-%, of the at least one organic dye C, wherein the organic dye C is selected from monoazo dyes, perinone dyes, quinophthalone dyes and anthraquinone dyes;
D. from 0 to 50.0 wt.-%, preferably from 0 to 40.0 wt.-%, more preferably 0 to 10.0 wt.%, of one or more additional component D, preferably selected from organic pigments, inorganic pigments different from B, scattering particles, impact modifiers, antistatic agents, antioxidants, moulding-release agents, flame retardants, lubricants, flow improvers, fillers, UV absorbing agents, light stabilizers and organophosphorus compounds, agents providing weathering resistance and plasticizers.

3. Thermoplastic moulding composition according to Claim 1 or 2, wherein the polymer matrix A comprises at least one thermoplastic polymer selected from polyalkyl (meth)acrylates, poly(meth)acrylimides, polyalkyl (meth)acrylate copolymers, polystyrene, polystyrene copolymers, acrylonitrile copolymers, polycarbonates, polyesters, polyamides, polyvinylidene fluoride, and polyolefns.

4. Thermoplastic moulding composition according to any of Claims 1 to 3, wherein the polymer matrix A comprises at least one thermoplastic polymer selected from polyalkyl (meth)acrylate, polycarbonates, and styrene-acrylonitrile copolymers.

5. Thermoplastic moulding composition according to any of Claims 1 to 4, wherein the inorganic pigment B1 is selected from pyrochlore type Nb/Sn/Zn oxosulfides, preferably Pigment Yellow 227, and the inorganic pigment B2 is selected from rutile type Ti/Sn/Zn oxide, preferably Pigment Yellow 216.

6. Thermoplastic moulding composition according to any of Claims 1 to 5, wherein the at least one organic dye C is selected from monoazo dyes, perinone dyes, quinophthalone dyes, anthraquinone dyes and pyrazolone dyes.

7. Thermoplastic moulding composition according to any of Claims 1 to 6, wherein the at least one organic dye C is selected from Solvent Yellow 93 (4-(4,5-Dihydro-1-phenyl-3-methyl-5-oxo-1H-pyrazole-4-ylidenemethyl)-1-phenyl-3-methyl-1H-pyrazole-5(4H)-one); Solvent Orange 60 (12H-phthaloperin-12-one); Solvent Orange 116 (4-Methyl-2,6-bis-p-tolylamino-5-(2-trifluoromethyl-phenylazo)-nicotinonitrile); Solvent Red 195 (cyano-5-[[5-cyano-2,6-bis[(3-methoxypropyl)amino]-4-methylpyridin-3-yl]azo]-3-methyl-2-thiophenecarboxylic acid methyl ester); Solvent Red 52 (3-Methyl-6-[(4-methylphenyl)amino]-3H-naphtho[1,2,3-de]quinoline-2,7-dione); and Solvent Red 135 (8,9,10,11-tetrachloro-12H-phthaloperin-12-one).

8. Thermoplastic moulding composition according to any of Claims 1 to 7, wherein the moulding composition comprises at least one further component D selected from organic pigments, inorganic pigments different from B, scattering particles, impact modifiers, antistatic agents, antioxidants, moulding-release agents, flame retardants, lubricants, flow improvers, fillers, UV absorbing agents, light stabilizers, organophosphorus compounds, agents providing weathering resistance and plasticizers.

9. Thermoplastic moulding composition according to any of Claims 1 to 8, wherein the moulding composition has a transmittance Y of less than 10 %, preferably less than 6.5 %, determined according to DIN 5033-7 using standard illumination D65/10°, measured on a sample having a thickness of 3.0 mm; and/or the thermoplastic moulding composition has colour values a* and b*, which are both greater than zero, determined according to DIN 5033-3 using standard illumination D65/10°, measured at reflexion on a sample having a thickness of 3.0 mm.

10. Colouring composition comprising
at least one inorganic pigment B, selected from mixed metal oxide or mixed metal oxosulfide B1, comprising the metals niobium (Nb), tin (Sn) and zinc (Zn); and/or from mixed metal oxide or mixed metal oxosulfide B2, comprising the metals titanium (Ti), tin (Sn) and zinc (Zn);
at least one organic dye C, preferably selected from monoazo dyes, perinone dyes, quinophthalone dyes and anthraquinone dyes; and
a dispersing medium, preferably a solid dispersing medium or a liquid dispersing medium.

11. Colouring composition according to Claim 10, wherein the colouring composition is a masterbatch comprising, each based on the total masterbatch:
from 0.01 to 40.0 wt.-% of the at least one inorganic pigment B;
from 0.01 to 40.0 wt.-% of the at least one organic dye C;
from 50.0 to 99.98 wt.-% of a solid dispersing medium, comprising at least one thermoplastic polymer; and
from 0.0 to 10.0 wt.-% of one or more auxiliary additive.

12. Colouring composition according to Claim 10, wherein the composition is a liquid colouring composition comprising, each based on the total liquid colouring composition:
from 0.5 to 50.0 wt.-% of the at least one inorganic pigment B;
from 0.5 to 50.0 wt.-% of the at least one organic dye C;
from 1.0 to 30.0 wt.-% of at least one dispersing agent;
from 48.0 to 98.0 wt.-% of a liquid dispersing medium; and
from 0.0 to 50.0 wt.-% of one or more auxiliary additive.

13. Process for producing a thermoplastic moulding composition according to any of Claims 1 to 9, wherein the process comprises the following steps:
i. providing a polymer matrix A comprising at least one thermoplastic polymer; and
ii. adding to the polymer matrix A from step i) at least one inorganic pigment B, selected from mixed metal oxides or mixed metal oxosulfides B1, comprising the metals niobium, tin and zinc; and/or from mixed metal oxides or mixed metal oxosulfides B2, comprising the metals titanium, tin and zinc; and at least one organic dye C.

14. Process according to Claim 13, wherein step ii) is carried out in an extruder, at a temperature ranging from 150 to 350 °C, preferably from 200 °C to 320 °C, more preferably from 230 °C to 300 °C.

15. Formed article made of the thermoplastic moulding composition according to any of Claims 1 to 9.

16. Process for producing a formed article from a thermoplastic moulding composition according to any of Claims 1 to 9 via injection moulding or via extrusion.

## Patentansprüche

1. Thermoplastische Formmasse, umfassend:
A. eine Polymermatrix A, die mindestens ein thermoplastisches Polymer umfasst;
B. mindestens ein anorganisches Pigment B, das aus gemischten Metalloxiden oder gemischten Metalloxosulfiden B1, die die Metalle Niob, Zinn und Zink enthalten; und/oder aus gemischten Metalloxiden oder gemischten Metalloxosulfiden B2, die die Metalle Titan, Zinn und Zink enthalten, ausgewählt ist;
C. mindestens einen organischen Farbstoff C.

2. Thermoplastische Formmasse nach Anspruch 1, wobei die thermoplastische Formmasse, jeweils bezogen auf die gesamte thermoplastische Formmasse, Folgendes umfasst:
A. 49,99998 bis 99,99998 Gew.-%, bevorzugt 59,9998 bis 99,9998 Gew.-%, weiter bevorzugt 89,998 bis 99,998 Gew.- %, der Polymermatrix A;
B. 0,00001 bis 5,0 Gew.-%, bevorzugt 0,0001 bis 4,0 Gew.-%, weiter bevorzugt 0,001 bis 3,0 Gew.-%, des mindestens einen anorganischen Pigments B;
C. 0,00001 bis 5,0 Gew.-%, bevorzugt 0,0001 bis 4,0 Gew.-%, weiter bevorzugt 0,001 bis 3,0 Gew.-%, des mindestens einen organischen Farbstoffs C, wobei der organische Farbstoff C aus Monoazofarbstoffen, Perinonfarbstoffen, Chinophthalonfarbstoffen und Anthrachinonfarbstoffen ausgewählt ist;
D. 0 bis 50,0 Gew.-%, bevorzugt 0 bis 40,0 Gew.-%, weiter bevorzugt 0 bis 10,0 Gew.-%, einer oder mehrerer zusätzlicher Komponenten D, bevorzugt ausgewählt aus organischen Pigmenten, von B verschiedenen anorganischen Pigmenten, Streupartikeln, Schlagzähmodifikatoren, Antistatika, Antioxidantien, Entformungsmitteln, Flammschutzmitteln, Schmiermitteln, Fließverbesserungsmitteln, Füllstoffen, UV-Absorbern, Lichtschutzmitteln und organischen Phosphorverbindungen, Verwitterungsschutzmitteln und Weichmachern.

3. Thermoplastische Formmasse nach Anspruch 1 oder 2, wobei die Polymermatrix A mindestens ein thermoplastisches Polymer umfasst, das aus Polyalkyl(meth)acrylaten, Poly(meth)acrylimiden, Polyalkyl(meth)acrylat-Copolymeren, Polystyrol, Polystyrol-Copolymeren, Acrylnitril-Copolymeren, Polycarbonaten, Polyestern, Polyamiden, Polyvinylidenfluorid und Polyolefinen ausgewählt ist.

4. Thermoplastische Formmasse nach einem der Ansprüche 1 bis 3, wobei die Polymermatrix A mindestens ein thermoplastisches Polymer umfasst, das aus Polyalkyl(meth)acrylat, Polycarbonaten und Styrol-Acrylnitril-Copolymeren ausgewählt ist.

5. Thermoplastische Formmasse nach einem der Ansprüche 1 bis 4, wobei das anorganische Pigment B1 aus Nb/Sn/Zn-Oxosulfiden vom Pyrochlor-Typ, bevorzugt Pigment Yellow 227, ausgewählt ist und das anorganische Pigment B2 aus Ti/Sn/Zn-Oxid vom Rutil-Typ, bevorzugt Pigment Yellow 216, ausgewählt ist.

6. Thermoplastische Formmasse nach einem der Ansprüche 1 bis 5, wobei der mindestens eine organische Farbstoff C aus Monoazofarbstoffen, Perinonfarbstoffen, Chinophthalonfarbstoffen, Anthrachinonfarbstoffen und Pyrazolonfarbstoffen ausgewählt ist.

7. Thermoplastische Formmasse nach einem der Ansprüche 1 bis 6, wobei der mindestens eine organische Farbstoff C aus Solvent Yellow 93 (4-(4,5-Dihydro-1-phenyl-3-methyl-5-oxo-1H-pyrazol-4-ylidenmethyl)-1-phenyl-3-methyl-1H-pyrazol-5(4H)-on); Solvent Orange 60 (12H-Phthaloperin-12-on); Solvent Orange 116 (4-Methyl-2,6-bis-p-tolylamino-5-(2-trifluormethylphenylazo)nicotinonitril); Solvent Red 195 (Cyano-5-[[5-cyano-2,6-bis[(3-methoxypropyl)amino]-4-methylpyridin-3-yl]azo]-3-methyl-2-thiophencarbonsäuremethylester); Solvent Red 52 (3-Methyl-6-[(4-methylphenyl)amino]-3H-naphtho[1,2,3-de]chinolin-2,7-dion); und Solvent Red 135 (8,9,10,11-Tetrachlor-12H-phthaloperin-12-on) ausgewählt ist.

8. Thermoplastische Formmasse nach einem der Ansprüche 1 bis 7, wobei die Formmasse mindestens eine weitere Komponente D umfasst, die aus organischen Pigmenten, von B verschiedenen anorganischen Pigmenten, Streupartikeln, Schlagzähmodifikatoren, Antistatika, Antioxidantien, Entformungsmitteln, Flammschutzmitteln, Schmiermitteln, Fließverbesserungsmitteln, Füllstoffen, UV-Absorbern, Lichtschutzmitteln, organischen Phosphorverbindungen, Verwitterungsschutzmitteln und Weichmachern ausgewählt ist.

9. Thermoplastische Formmasse nach einem der Ansprüche 1 bis 8, wobei die Formmasse eine Transmission Y von weniger als 10 %, bevorzugt weniger als 6,5 %, bestimmt nach DIN 5033-7 unter Verwendung von Normlichtart D65/10°, gemessen an einer Probe mit einer Dicke von 3,0 mm, aufweist; und/oder die thermoplastische Formmasse Farbwerte a* und b*, die beide größer als null sind, bestimmt nach DIN 5033-3 unter Verwendung von Normlichtart D65/10°, gemessen bei Reflexion an einer Probe mit einer Dicke von 3,0 mm, aufweist.

10. Färbezusammensetzung, umfassend
mindestens ein anorganisches Pigment B, das aus gemischten Metalloxiden oder gemischten Metalloxosulfiden B1, die die Metalle Niob (Nb), Zinn (Sn) und Zink (Zn) enthalten; und/oder aus gemischten Metalloxiden oder gemischten Metalloxosulfiden B2, die die Metalle Titan (Ti), Zinn (Sn) und Zink (Zn) enthalten, ausgewählt ist;
mindestens einen organischen Farbstoff C, vorzugsweise ausgewählt aus Monoazofarbstoffen, Perinonfarbstoffen, Chinophthalonfarbstoffen und Anthrachinonfarbstoffen; und
ein Dispergiermedium, vorzugsweise ein festes Dispergiermedium oder ein flüssiges Dispergiermedium.

11. Färbezusammensetzung nach Anspruch 10, wobei es sich bei der Färbezusammensetzung um einen Masterbatch handelt, der, jeweils bezogen auf den gesamten Masterbatch, Folgendes umfasst:
0,01 bis 40,0 Gew.-% des mindestens einen anorganischen Pigments B;
0,01 bis 40,0 Gew.-% des mindestens einen organischen Farbstoffs C;
50,0 bis 99,98 Gew.-% eines festen Dispergiermediums, das mindestens ein thermoplastisches Polymer umfasst; und 0,0 bis 10,0 Gew.-% eines oder mehrerer Hilfsadditive.

12. Färbezusammensetzung nach Anspruch 10, wobei es sich bei der Zusammensetzung um eine flüssige Färbezusammensetzung handelt, die, jeweils bezogen auf die gesamte flüssige Farbzusammensetzung, Folgendes umfasst:
0,5 bis 50,0 Gew.-% des mindestens einen anorganischen Pigments B;
0,5 bis 50,0 Gew.-% des mindestens einen organischen Farbstoffs C;
1,0 bis 30,0 Gew.-% mindestens eines Dispergiermittels;
48,0 bis 98,0 Gew.-% eines flüssigen Dispergiermediums; und
0,0 bis 50,0 Gew.-% eines oder mehrerer Hilfsadditive.

13. Verfahren zur Herstellung einer thermoplastischen Formmasse nach einem der Ansprüche 1 bis 9, wobei das Verfahren die folgenden Schritte umfasst:
i. Bereitstellen einer Polymermatrix A, die mindestens ein thermoplastisches Polymer umfasst; und
ii. Zugeben mindestens eines anorganischen Pigments B, das aus gemischten Metalloxiden oder gemischten Metalloxosulfiden B1, die die Metalle Niob, Zinn und Zink enthalten; und/oder aus gemischten Metalloxiden oder gemischten Metalloxosulfiden B2, die die Metalle Titan, Zinn und Zink enthalten, ausgewählt ist; und mindestens eines organischen Farbstoffs C zu der Polymermatrix A aus Schritt i).

14. Verfahren nach Anspruch 13, wobei Schritt ii) in einem Extruder bei einer Temperatur im Bereich von 150 bis 350 °C, bevorzugt von 200 °C bis 320 C, weiter bevorzugt von 230 °C bis 300 °C, durchgeführt wird.

15. Formkörper aus der thermoplastischen Formmasse nach einem der Ansprüche 1 bis 9.

16. Verfahren zur Herstellung eines Formkörpers aus einer thermoplastischen Formmasse nach einem der Ansprüche 1 bis 9 durch Spritzgießen oder durch Extrusion.

## Revendications

1. Composition de moulage thermoplastique comprenant :
A. une matrice de polymère A comprenant au moins un polymère thermoplastique ;
B. au moins un pigment inorganique B choisi parmi les oxydes métalliques mixtes ou les oxosulfures métalliques mixtes B1, comprenant les métaux niobium, étain et zinc ; et/ou parmi les oxydes métalliques mixtes ou les oxosulfures métalliques mixtes B2, comprenant les métaux titane, étain et zinc ;
C. au moins un colorant organique C.

2. Composition de moulage thermoplastique selon la revendication 1, dans laquelle la composition de moulage thermoplastique comprend, chaque fois par rapport à la composition de moulage thermoplastique totale :
A. de 49,99998 à 99,99998 % en poids, de préférence de 59,9998 à 99,9998 % en poids, mieux encore de 89,998 à 99,998 % en poids, de la matrice de polymère A ;
B. de 0,00001 à 5,0 % en poids, de préférence de 0,0001 à 4,0 % en poids, plus préférablement de 0,001 à 3,0 % en poids, du pigment inorganique B ;
C. de 0,00001 à 5,0 % en poids, de préférence de 0,0001 à 4,0 % en poids, plus préférablement de 0,001 à 3,0 % en poids de l'au moins un colorant organique C, le colorant organique C étant choisi parmi les colorants monoazoïques, les colorants périnone, les colorants quinophtalone et les colorants anthraquinone ;
D. de 0 à 50,0 % en poids, de préférence de 0 à 40,0 % en poids, plus préférablement de 0 à 10,0 % en poids, d'un ou de plusieurs autres composants D, de préférence choisis parmi les pigments organiques, les pigments inorganiques différents de B, les particules diffusantes, les modificateurs de résistance aux chocs, les agents antistatiques, les antioxydants, les agents de démoulage, les agents ignifugeants, des lubrifiants, les agents d'amélioration de l'écoulement, les charges, les agents absorbant les UV, les photostabilisants et les composés organophosphorés, les agents fournissant une résistance aux intempéries et les plastifiants.

3. Composition de moulage thermoplastique selon la revendication 1 ou 2, dans laquelle la matrice de polymère A comprend au moins un polymère thermoplastique choisi parmi les poly((méth)acrylates d'alkyle), les poly(méth)acrylimides, les copolymères de poly(((méth)acrylates d'alkyle), le polystyrène, les copolymères de polystyrène, les copolymères d'acrylonitrile, les polycarbonates, les polyesters, les polyamides, le poly(fluorure de vinylidène) et les polyoléfines.

4. Composition de moulage thermoplastique selon l'une quelconque des revendications 1 à 3, dans laquelle la matrice de polymère A comprend au moins un polymère thermoplastique choisi parmi le poly((méth)acrylate d'alkyle), les polycarbonates et les copolymères de styrène-acrylonitrile.

5. Composition de moulage thermoplastique selon l'une quelconque des revendications 1 à 4, dans laquelle le pigment inorganique B1 est choisi parmi les oxosulfures de Nb/Sn/Zn du type pyrochlore, de préférence le Pigment Yellow 227, et le pigment inorganique B2 est choisi parmi un oxyde de Ti/Sn/Zn du type rutile, de préférence le Pigment Yellow 216.

6. Composition de moulage thermoplastique selon l'une quelconque des revendications 1 à 5, dans laquelle l'au moins un colorant organique C est choisi parmi les colorants monoazoïques, les colorants périnone, les colorants quinophtalone, les colorants anthraquinone et les colorants pyrazolone.

7. Composition à mouler thermoplastique selon l'une quelconque des revendications 1 à 6, dans laquelle l'au moins un colorant organique C est sélectionné parmi le Solvent Yellow 93 (4-(4,5-dihydro-1-phényl-3-méthyl-5-oxo-1H-pyrazole-4-ylidèneméthyl)-1-phényl-3-méthyl-1H-pyrazole-5(4H)-one) ; le Solvent Orange 60 (12H-phtalopérine-12-one) ; le Solvent Orange 116 (4-méthyl-2,6-bis-p-tolylamino-5-(2-trifluorométhyl-phénylazo)-nicotinonitrile) ; le Solvent Red 195 (ester méthylique de l'acide cyano-5-[[5-cyano-2,6-bis[(3-méthoxypropyl)amino]-4-méthylpyridin-3-yl]azo]-3-méthyl-2-thiophènecarboxylique) ; le Solvent Red 52 (3-méthyl-6-[(4-méthylphényl)amino]-3H-naphto[1,2,3-de]quinoléine-2,7-dione) ; et le Solvent Red 135 (8,9,10,11-tétrachloro-12H-phtalopérin-12-one).

8. Composition de moulage thermoplastique selon l'une quelconque des revendications 1 à 7, dans laquelle la composition de moulage contient au moins un autre composant D choisi parmi les pigments organiques, les pigments inorganiques différents de B, les particules diffusantes, les modificateurs de résistance aux chocs, les agents antistatiques, les antioxydants, les agents de démoulage, les agents ignifugeants, des lubrifiants, les agents d'amélioration de l'écoulement, les charges, les agents absorbant les UV, les photostabilisants et les composés organophosphorés, les agents fournissant une résistance aux intempéries et les plastifiants.

9. Composition de moulage thermoplastique selon l'une quelconque des revendications 1 à 8, dans laquelle la composition de moulage présente un facteur de transmission Y inférieur à 10 %, de préférence inférieur à 6,5 %, déterminé selon la norme DIN 5033-7 en utilisant un éclairage standard D65/10°, mesuré sur un échantillon ayant une épaisseur de 3,0 mm ; et/ou la composition de moulage thermoplastique présente des valeurs de couleur a* et b*, toutes deux supérieures à zéro, déterminées selon la norme DIN 5033-3 en utilisant l'éclairage standard D65/10°, mesurées à la réflexion sur un échantillon d'une épaisseur de 3,0 mm.

10. Composition colorante contenant
au moins un pigment inorganique B, choisi parmi un oxyde métallique mixte ou un oxosulfure métallique mixte B1, comprenant les métaux niobium (Nb), étain (Sn) et zinc (Zn) ; et/ou parmi un oxyde métallique mixte ou un oxosulfure métallique mixte B2, comprenant les métaux titane (Ti), étain (Sn) et zinc (Zn) ;
au moins un colorant organique C, de préférence choisi parmi les colorants monoazoïques, les colorants périnone, les colorants quinophtalone et les colorants anthraquinone ; et
un milieu de dispersion, de préférence un milieu de dispersion solide ou un milieu de dispersion liquide.

11. Composition colorante selon la revendication 10, dans laquelle la composition colorante est un mélange maître comprenant, à chaque fois par rapport au mélange maître total :
de 0,01 à 40,0 % en poids de l'au moins un pigment inorganique B ;
de 0,01 à 40,0 % en poids de l'au moins un colorant organique C ;
de 50,0 à 99,98 % en poids d'un milieu de dispersion solide, comprenant au moins un polymère thermoplastique ; et
de 0,0 à 10,0 % en poids d'un ou plusieurs additifs auxiliaires.

12. Composition colorante selon la revendication 10, dans laquelle la composition est une composition colorante liquide comprenant, à chaque fois par rapport à la composition colorante liquide totale :
de 0,5 à 50,0 % en poids de l'au moins un pigment inorganique B ;
de 0,5 à 50,0 % en poids de l'au moins un colorant organique C ;
de 1,0 à 30,0 % en poids d'au moins un agent de dispersion ;
de 48,0 à 98,0 % en poids d'un milieu de dispersion liquide ; et
de 0,0 à 50,0 % en poids d'un ou plusieurs additifs auxiliaires.

13. Procédé de préparation d'une composition de moulage thermoplastique selon l'une quelconque des revendications 1 à 9, dans lequel le procédé comprend les étapes suivantes :
i. fourniture d'une matrice de polymère A comprenant au moins un polymère thermoplastique ; et
ii. ajout à la matrice de polymère A de l'étape i) d'au moins un pigment inorganique B, choisi parmi les oxydes métalliques mixtes ou les oxosulfures métalliques mixtes B1, comprenant les métaux niobium, étain et zinc ; et/ou parmi les oxydes métalliques mixtes ou les oxosulfures métalliques mixtes B2, comprenant les métaux titane, étain et zinc ; et au moins un colorant organique C.

14. Procédé selon la revendication 13, dans lequel l'étape ii) est mise en œuvre dans une extrudeuse, à une température dans la plage de 150 à 350 °C, de préférence de 200 °C à 320 °C, plus préférablement de 230 °C à 300 °C.

15. Article mis en forme composé de la composition de moulage thermoplastique selon l'une quelconque des revendications 1 à 9.

16. Procédé de fabrication d'un article mis en forme à partir d'une composition de moulage thermoplastique selon l'une quelconque des revendications 1 à 9, par moulage par injection ou par extrusion.
